(19) Europäisches Patentamt
European Patent Office
Office européen des brevets

(11) **EP 3 633 905 B1**

(12) **EUROPEAN PATENT SPECIFICATION**

(45) Date of publication and mention
of the grant of the patent:
**16.03.2022 Bulletin 2022/11**

(21) Application number: **19191671.7**

(22) Date of filing: **11.04.2014**

(51) International Patent Classification (IPC):
*H04L 5/00* (2006.01)   *H04L 5/14* (2006.01)
*H04L 1/18* (2006.01)   *H04W 72/04* (2009.01)

(52) Cooperative Patent Classification (CPC):
**H04W 72/0446; H04L 1/1861; H04L 5/0055;
H04L 5/1469;** H04L 5/0023

(54) **CONTROL CHANNEL RESOURCE ALLOCATION METHOD AND APPARATUS**

VERFAHREN UND VORRICHTUNG ZUR ZUWEISUNG VON STEUERKANALRESSOURCEN

PROCÉDÉ ET APPAREIL D'ATTRIBUTION DE RESSOURCES DE CANAL DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.04.2020 Bulletin 2020/15**

(62) Document number(s) of the earlier application(s) in
accordance with Art. 76 EPC:
**14889165.8 / 3 131 222**

(73) Proprietor: **Huawei Technologies Co., Ltd.
Guangdong 518129 (CN)**

(72) Inventors:
• **WANG, Yi
Shenzhen, Guangdong 518129 (CN)**
• **TANG, Zhenfei
Shenzhen, Guangdong 518129 (CN)**
• **LI, Zhongfeng
Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
**WO-A1-2013/141770   US-A1- 2014 029 490**

• **HARRI HOLMA ET AL: "LTE for UMTS - OFDMA
and SC-FDMA Based Radio Access, [part:
Chapter 12]", INTERNET CITATION, 2 June 2009
(2009-06-02), pages 1-11, XP002549277, ISBN:
978-0-470-99401-6 Retrieved from the Internet:
URL:http://www3.interscience.wiley.com/cgi
-bin/bookhome/122293604 [retrieved on
2009-10-08]**
• **"3rd Generation Partnership Project; Technical
Specification Group Radio Access Network;
Evolved Universal Terrestrial Radio Access
(E-UTRA); Physical layer procedures (Release
12)", 3GPP STANDARD; 3GPP TS 36.213, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG1, no. V12.1.0, 19
March 2014 (2014-03-19), pages 1-186,
XP050770002,**

## Description

### TECHNICAL FIELD

The present invention relates to the field of mobile communications technologies, and in particular, to a control channel resource allocation method and apparatus.

### BACKGROUND

A time division multiplexing manner is used for uplink transmission of a TDD (Time Division Multiplex, time division multiplexing) system.

An LTE (Long Term Evolution, Long Term Evolution) TDD system defines seven uplink-downlink subframe configurations, which are specifically shown in Table 1. Different uplink-downlink subframe configurations may be applied to scenarios having different uplink-downlink service requirements.

**Table 1**

| Uplink-downlink subframe configuration | Subframe number | | | | | | | | | |
|:---:|:---:|:---:|:---:|:---:|:---:|:---:|:---:|:---:|:---:|:---:|
| | 0 | 1 | 2 | 3 | 4 | 5 | 6 | 7 | 8 | 9 |
| 0 | D | S | U | U | U | D | S | U | U | U |
| 1 | D | S | U | U | D | D | S | U | U | D |
| 2 | D | S | U | D | D | D | S | U | D | D |
| 3 | D | S | U | U | U | D | D | D | D | D |
| 4 | D | S | U | U | D | D | D | D | D | D |
| 5 | D | S | U | D | D | D | D | D | D | D |
| 6 | D | S | U | U | U | D | S | U | U | D |

Sub frames of the TDD system may be classified into three types: an uplink subframe, a downlink subframe, and a special subframe. In Table 1, D represents a downlink subframe, S represents a special subframe, and U represents an uplink subframe. It can be known from Table 1 that, in the TDD system, in one radio frame, some subframes are uplink subframes, and some subframes are downlink subframes. In other words, a part of duration of one radio frame is used for uplink transmission, and a part of duration is used for downlink transmission.

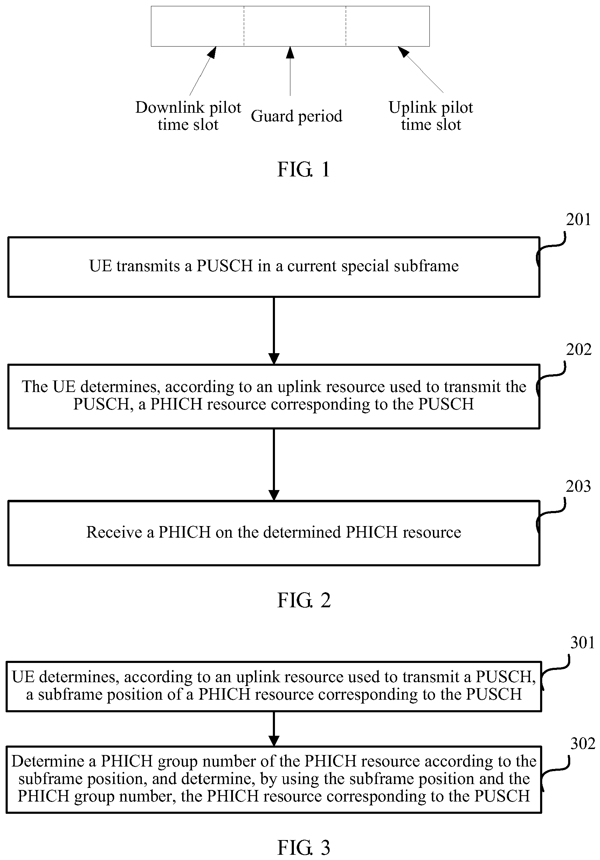

A structure of a special subframe is shown in FIG 1. The special subframe includes three parts: a DwPTS (Downlink Pilot Time Slot, downlink pilot time slot), a guard period (Guard Period, guard period), and a UpPTS (Uplink Pilot Time Slot, uplink pilot time slot). Specifically, the DwPTS is used for downlink transmission, for example, transmission of a control channel, a data channel, a synchronization signal, and a pilot signal. The GP is used as a guard period, and is not used for uplink or downlink transmission. The UpPTS is used to transmit an uplink SRS (Sounding Reference Signal, sounding reference signal) or PRACH (Physical Random Access Channel, physical random access channel).

In the TDD system, a part of duration of one radio frame is used for uplink transmission, and a part of duration is used for downlink transmission. Because uplink and downlink subframes work in a time division duplex manner, for UE (User Equipment, user equipment), a quantity of subframes that can be used for uplink data transmission is limited. In other words, the time division manner may cause a small uplink throughput (a data transmission amount per unit time) of the system.

WO 2013/141770 A1 discloses a method for dynamic configuration of a subframe in TDD communications between a UE and a radio network node. A frame structure includes one or more subframes preconfigured as a downlink subframe, one or more subframes preconfigured as an uplink subframe, and one or more dynamically configurable subframes. Each dynamically configurable subframe includes a guard time period and at least a downlink part for transporting a dynamically configurable amount of downlink information, and in some embodiments, uplink information. A configuration for dynamically configurable subframes is determined for transmission and/or reception between the UE radio terminal and the radio network node.

Chapter 12 of the book "LTE for UMTS - OFDMA and SC-FDMA Based Radio Access" by Harri Holma et al., John Wiley & Sons, 2 June 2009 outlines the HARQ process and timing in LTE including the HARQ design for uplink transmission time interval bundling.

Section 9.1.2 of the 3rd Generation Partnership Project (3GPP) technical specification 36.213, version 12.1.0, 19 March 2014, technical specification group Radio Access Network, physical layer procedures (release 12), describes details of the PHICH assignment procedure for Evolved Universal Terrestrial Radio Access (E-UTRA).

US 2014/029490 A1 describes a method for transmitting/receiving data in a wireless access system. The method comprises the following steps: setting a cell group per at least one cell having an identical uplink-downlink configuration, if a plurality of cells are set to a user equipment;

## SUMMARY

The invention is defined by the independent claims. Advantageous embodiments of the invention are given in the dependent claims.

In the following, embodiments not falling within the scope of the claims are to be understood as examples usefol for understanding the invention.

Embodiments of the present invention provide a control channel resource allocation methods, apparatuses and a system according to the appended independent claims, to resolve a problem in the prior art that a time division manner causes a small uplink throughput of a system.

## BRIEF DESCRIPTION OF DRAWINGS

FIG. 1 is a schematic structural diagram of a special subframe in the prior art;

FIG. 2 is a schematic flowchart of a control channel resource allocation method according to Embodiment 1 of the present invention;

FIG. 3 is a schematic flowchart of a method for determining a PHICH resource corresponding to a PUSCH according to an embodiment of the present invention;

FIG. 4 is a schematic flowchart of a control channel resource allocation method according to Embodiment 4 of the present invention;

FIG. 5 is a schematic structural diagram of user equipment according to an embodiment of the present invention; and

FIG. 6 is a schematic structural diagram of a base station according to an embodiment of the present invention.

## DESCRIPTION OF EMBODIMENTS

The scope of the invention is solely limited by the appended claims.

In a TDD system, because uplink and downlink subframes work in a time division duplex manner, for UE, a quantity of subframes that can be used for uplink data transmission is limited. For this problem, an implementable solution is: on condition that a total length 1 ms of special subframes is not changed, a quantity of UpPTS symbols is increased by changing a length of a special timeslot GP and a length of the UpPTS, an additional resource may be obtained from the UpPTS to transmit an uplink PUSCH (Physical Uplink Shared Channel, physical uplink shared channel), that is, transmit uplink data.

In a method for transmitting an uplink PUSCH by using a special subframe, an ACK/HACK-based HARQ (Hybrid Automatic Repeat Request, hybrid automatic repeat request) technology also needs to be used to improve the decoding accuracy. Based on the foregoing case, the method provided in the embodiments of the present invention provides a solution, to determine position allocation and a time frequency resource of a downlink PHICH (Physical Hybrid-ARQ Indicator Channel, physical hybrid-ARQ indicator channel) corresponding to a special subframe used to transmit uplink data.

### Embodiment 1

As shown in FIG. 2, for the foregoing problem, this embodiment of the present invention provides a control channel resource allocation method. The method includes:

Step 201: UE (User Equipment, user equipment) sends a PUSCH (Physical Uplink Shared Channel, physical uplink shared channel) in a current special subframe.

Using a special subframe for transmission refers to: using a UpPTS (Uplink Pilot Time Slot, uplink pilot time slot) in the special subframe as a subframe used to transmit uplink data.

Step 202: The UE determines, according to an uplink resource used to transmit the PUSCH, a PHICH resource corresponding to the PUSCH, where the uplink resource used to transmit the PUSCH includes the current special subframe.

In this embodiment of the present invention, the uplink resource used to transmit the PUSCH includes a UpPTS used to transmit the PUSCH, or may include an uplink subframe (or referred to an uplink normal subframe (normal subframe)). A specific case may be: A: the uplink resource may be a UpPTS in one special subframe; B: the uplink resource may be UpPTSs in multiple special subframes, for example, two UpPTSs in one radio frame; C, the uplink resource may also include at least one UpPTS and at least one uplink subframe. In the foregoing B and C, the uplink resource is distributed in multiple subframes, and the multiple subframes may be referred to as a bundle subframe.

Step 203: Receive a PHICH on the determined PHICH resource.

Because the existing LTE system uses an ACK/NACK-based HARQ technology, a specific HARQ process of an uplink path is: a transmit end UE pauses after sending a data packet to a receive end eNB by using a PUSCH channel, and waits for a response message of the eNB. After the data packet arrives at the receive end eNB after a particular transmission delay, the eNB verifies the data packet. If the receiving is correct, the receive end feeds back an acknowledgment (ACK) message by using a downlink control channel PHICH, and if the receiving is incorrect, the receive end reserves the received desired information, and feeds back a non-acknowledgment (NACK) message. When receiving the ACK message, the UE sends new data; otherwise, the UE resends the previously-transmitted data packet, and the eNB combines the retransmitted data packet and the previously received data packet and performs joint decoding, thereby improving the decoding accuracy.

A process from when the UE transmits an uplink PUSCH and the eNB processes the uplink PUSCH and feeds back a downlink PHICH to when the UE receives and process the PHICH information and retransmits the PUSCH or transmits a new PUSCH refers to as an RTT (round trip time, round trip time) of one HARQ process. Considering a transmission delay and eNB processing time, a time from when the uplink PUSCH is sent to when the downlink PHICH is received should not be less than 4 ms; likewise, considering a transmission delay and UE processing time, a time from when the downlink PHICH is received to when a new uplink PUSCH is transmitted or the uplink PUSCH is retransmitted should be not less than 4 ms. An RTT value is not less than 8 ms.

Based on the uplink resource used to transmit the PUSCH, there may be multiple combinations and features of the HARQ technology, in this embodiment of the present invention, there may be multiple manners used to determine, according to the uplink resource used to transmit the PUSCH, the PHICH resource corresponding to the PUSCH. During specific implementation, main rules are:

a time from when a PHICH is received to when a PUSCH is transmitted and a time from when the PUSCH is transmitted to when a feedback PHICH is received are minimized, and satisfy a requirement of the base station or the UE for a smallest processing time, for example, 3 ms;

it is avoided as far as possible that PHICH resources in one subframe correspond to different HARQ processes; and a current RTT value (a time from when a data packet is transmitted for the first time to when the data packet is retransmitted) is reused as far as possible or an additional RTT value as smaller as possible is added.

The foregoing rules are merely used as a reference when a UpPTS is used to transmit a PUSCH, and do not need to be satisfied necessarily. Specifically, when the UpPTS is used to transmit the PUSCH, only some rules of the foregoing rules may be considered, for example, only a rule involving an RTT is considered, or rules involving an RTT and an HARQ process are considered. Under the guidance of the foregoing rules, specific implementation steps of determining, by the UE according to an uplink resource used to transmit the PUSCH, a PHICH resource corresponding to the PUSCH in step 102 include (as shown in FIG. 3):

Step 301: The UE determines, according to the uplink resource used to transmit the PUSCH, a subframe position of the PHICH resource corresponding to the PUSCH.

Step 302: Determine a PHICH group number of the PHICH resource according to the subframe position, and determine, according to the subframe position and the PHICH group number, the PHICH resource corresponding to the PUSCH.

According to the foregoing method, the following describes in detail the method provided in this embodiment of the present invention with reference to tables and various uplink-downlink subframe configurations.

I. When a subframe of the uplink resource used to transmit the PUSCH is only the current special subframe, the determining, by the UE according to the uplink resource used to transmit the PUSCH, a subframe position of the PHICH resource corresponding to the PUSCH includes:

Specifically, with reference to seven uplink-downlink subframe configurations that are defined in an LTE TDD system and that are shown in Table 1, the following describes in detail an implementable solution of the PHICH resource in each configuration.

1. When an uplink-downlink subframe configuration is 0 and the current special subframe is a subframe n, determine that the PHICH resource is located in the $K^{th}$ subframe after the current special subframe n, where

when n = 1 or 6, K = 5; or

when n = 1 or 6, K = 10.

Specifically, when the user equipment UE transmits the PUSCH in special subframe 1 or 6, correspondingly, it is determined that the PHICH resource is located in the $K^{th}$ subframe after the special subframe 1 or 6, where specific optional values of K may be shown in Table 2:

**Table 2**

| | Subframe | | | | | | | | | |
|---|---|---|---|---|---|---|---|---|---|---|
| | 0 | 1 | 2 | 3 | 4 | 5 | 6 | 7 | 8 | 9 |
| Subframe configuration 0 | D | S | U | U | U | D | S | U | U | U |
| K1 = 5 | | 5 | | | | | 5 | | | |
| K2 = 10 | | 10 | | | | | 10 | | | |

In a specific subframe structure, for an UL/DL configuration 0 (uplink-downlink subframe configuration 0):

A. As shown in Table 2, in a case in which K1 = 5, for a PUSCH transmitted in a special subframe n = 1, the UE receives corresponding HARQ downlink PHICH feedback information (that is, receives the PHICH on the determined PHICH resource) in the fifth subframe (a value corresponding to a cross point of line 4 and column 3 in Table 2) after the subframe n = 1, that is, receives, in a subframe n = 6, the HARQ downlink PHICH feedback information corresponding to the PUSCH; for a PUSCH transmitted in the subframe n = 6, the UE receives corresponding HARQ downlink PHICH feedback information (that is, the UE receives, in a subframe n = 1, the HARQ downlink PHICH feedback information corresponding to the PUSCH) in the fifth subframe (a value corresponding to a cross point of line 4 and column 8 in Table 2) after the subframe 6.

B. As shown in Table 2, in a case in which K2 = 10, for a PUSCH transmitted in a special subframe n = 1, the UE receives corresponding HARQ downlink PHICH feedback information (that is, receives the PHICH on the determined PHICH resource) in the $10^{th}$ subframe after the subframe n = 1, that is, receives, in a subframe n = 1 in a next radio frame, the HARQ downlink PHICH feedback information corresponding to the PUSCH; for a PUSCH transmitted in a subframe n = 6, the UE receives, in a subframe n = 6 in the next radio frame, the HARQ downlink PHICH feedback information corresponding to the PUSCH.

In the foregoing embodiment, it is determined that the PHICH resource is located in the fifth or $10^{th}$ subframe after the current special subframe. Therefore, a case in which more than two PHICHs are received in one subframe is avoided, a smallest change is made to the existing protocol, and meanwhile, a time interval from when a PUSCH is transmitted to a PHICH is received satisfies a smallest processing time of the base station and a transmission delay is relatively small, or a time interval from when a PHICH is received to when a PUSCH is transmitted satisfies a smallest processing time of the UE and a transmission delay is relatively small.

A transmission delay is relatively small.

2. When an uplink-downlink subframe configuration is 1 and the current special subframe is a subframe n, determine that the PHICH resource is located in the $K^{th}$ subframe after the current special subframe n, where

when n = 1 or 6, K = 4;

when n = 1 or 6, K = 5; or

when n = 1 or 6, K = 8.

Specifically, when the user equipment UE transmits the PUSCH in the special subframe 1 or 6, correspondingly, it is determined that the PHICH resource is located in the $K^{th}$ subframe after a special subframe 1 or 6, where specific optional values of K may be shown in Table 3:

**Table 3**

| | Subframe | | | | | | | | | |
|---|---|---|---|---|---|---|---|---|---|---|
| | 0 | 1 | 2 | 3 | 4 | 5 | 6 | 7 | 8 | 9 |
| Subframe configuration 1 | D | S | U | U | D | D | S | U | U | D |
| K1 = 4 | | 4 | | | | | 4 | | | |
| K2 = 5 | | 5 | | | | | 5 | | | |

(continued)

| | Subframe | | | | | | | | | |
|---|---|---|---|---|---|---|---|---|---|---|
| | 0 | 1 | 2 | 3 | 4 | 5 | 6 | 7 | 8 | 9 |
| Subframe configuration 1 | D | S | U | U | D | D | S | U | U | D |
| K3 = 8 | | 8 | | | | | 8 | | | |

In a specific subframe structure, for an UL/DL configuration 1 (uplink-downlink subframe configuration 1):

A. As shown in Table 3, in a case in which K1 = 4, for a PUSCH transmitted in a special subframe n = 1, the UE receives corresponding HARQ downlink PHICH feedback information (that is, receives the PHICH on the determined PHICH resource) in the fourth subframe after the subframe n = 1, that is, receives, in a subframe m = 5, the HARQ downlink PHICH feedback information corresponding to the PUSCH; for a PUSCH transmitted in a subframe n = 6, the UE receives, in a subframe m = 0 in a next radio frame, the HARQ downlink PHICH feedback information corresponding to the PUSCH.

In the foregoing embodiment, it is determined that the PHICH resource is located in the fourth subframe after the current special subframe. Therefore, a case in which more than one PHICH is received in one subframe is avoided, and a smallest change is made to the existing protocol, and meanwhile, a time interval from when a PUSCH is transmitted to when a PHICH is received better satisfies a requirement of a smallest processing time of the base station and a transmission delay is relatively small.

B. As shown in Table 3, in a case in which K2 = 5, for a PUSCH transmitted in a special subframe n = 1, the UE receives corresponding HARQ downlink PHICH feedback information (that is, receives the PHICH on the determined PHICH resource) in the fifth subframe after the subframe n = 1, that is, receives, in a subframe n = 6, the HARQ downlink PHICH feedback information corresponding to the PUSCH; for a PUSCH transmitted in the subframe n = 6, the UE receives, in a subframe n = 1 in a next radio frame, the HARQ downlink PHICH feedback information corresponding to the PUSCH.

C. As shown in Table 3, in a case in which K3 = 8, for a PUSCH transmitted in a special subframe n = 1, the UE receives corresponding HARQ downlink PHICH feedback information (that is, receives the PHICH on the determined PHICH resource) in the eighth subframe after the subframe n = 1, that is, receives, in a subframe m = 9, the HARQ downlink PHICH feedback information corresponding to the PUSCH; for a PUSCH transmitted in a subframe n = 6, the UE receives, in a subframe m = 4 in a next radio frame, the HARQ downlink PHICH feedback information corresponding to the PUSCH.

In the foregoing embodiment, it is determined that the PHICH resource is located in the eighth subframe after the current special subframe. Therefore, a case in which more than two PHICHs are received in one subframe is avoided, a smallest change is made to the existing protocol, and meanwhile, a time interval from when a PUSCH is transmitted to when a PHICH is received satisfies a requirement of a smallest processing time of the base station and a transmission delay is relatively small.

3. When an uplink-downlink subframe configuration is 2 and the current special subframe is a subframe n, determine that the PHICH resource is located in the $K^{th}$ subframe after the current special subframe n, where

when n = 1 or 6, K = 4;
when n = 1 or 6, K = 5;
when n = 1 or 6, K = 7; or
when n = 1 or 6, K = 8.

Specifically, when the user equipment UE transmits the PUSCH in the special subframe 1 or 6, correspondingly, it is determined that the PHICH resource is located in the $K^{th}$ subframe after the special subframe 1 or 6, where specific optional values of K may be shown in Table 4:

**Table 4**

| | Subframe | | | | | | | | | |
|---|---|---|---|---|---|---|---|---|---|---|
| | 0 | 1 | 2 | 3 | 4 | 5 | 6 | 7 | 8 | 9 |
| Subframe configuration 2 | D | S | U | D | D | D | S | U | D | D |
| K1 =4 | | 4 | | | | | 4 | | | |
| K2 = 5 | | 5 | | | | | 5 | | | |

(continued)

| | Subframe | | | | | | | | | |
|---|---|---|---|---|---|---|---|---|---|---|
| | 0 | 1 | 2 | 3 | 4 | 5 | 6 | 7 | 8 | 9 |
| Subframe configuration 2 | D | S | U | D | D | D | S | U | D | D |
| K3 = 7 | | 7 | | | | | 7 | | | |
| K4 = 8 | | 8 | | | | | 8 | | | |

In a specific subframe structure, for an UL/DL configuration 2 (uplink-downlink subframe configuration 2):

As shown in Table 4, in a case in which K1 = 4, for a PUSCH transmitted in a special subframe n = 1, the UE receives corresponding HARQ downlink PHICH feedback information (that is, receives the PHICH on the determined PHICH resource) in the fourth subframe after the subframe 1, that is, receives, in a subframe m = 5, the HARQ downlink PHICH feedback information corresponding to the PUSCH; for a PUSCH transmitted in a subframe n = 6, the UE receives, in a subframe m = 0 in a next radio frame, the HARQ downlink PHICH feedback information corresponding to the PUSCH.

In Table 4, in a case in which K2 = 5, K3 = 7, and K4 = 8, when the UE transmits a PUSCH in a special subframe n = 1 or 6, the UE receives corresponding HARQ downlink PHICH feedback information in a specific subframe. With reference to the values of K in Table 4, a determining manner of the specific subframe is the same as that of K1 = 4, and details are not described herein again.

4. When an uplink-downlink subframe configuration is 3 and the current special subframe is a subframe n, determine that the PHICH resource is located in the $K^{th}$ subframe after the current special subframe n, where when n = 1, K = 4, 5, 6, 7, 8, or 9.

Specifically, when the user equipment UE transmits the PUSCH in the special subframe n = 1, correspondingly, it is determined that the PHICH resource is located in the $K^{th}$ subframe after the special subframe 1, where specific optional values of K may be shown in Table 5:

**Table 5**

| | Subframe | | | | | | | | | |
|---|---|---|---|---|---|---|---|---|---|---|
| | 0 | 1 | 2 | 3 | 4 | 5 | 6 | 7 | 8 | 9 |
| Subframe configuration 3 | D | S | U | U | U | D | D | D | D | D |
| K1 =4 | | 4 | | | | | | | | |
| K2 = 5 | | 5 | | | | | | | | |
| K3 = 6 | | 6 | | | | | | | | |
| K4 = 7 | | 7 | | | | | | | | |
| K5 = 8 | | 8 | | | | | | | | |
| K6 = 9 | | 9 | | | | | | | | |

In a specific subframe structure, for an UL/DL configuration 3 (uplink-downlink subframe configuration 3): As shown in Table 5, in a case in which K1 = 4, for a PUSCH transmitted in a special subframe n = 1, the UE receives corresponding HARQ downlink PHICH feedback information (receives the PHICH on the determined PHICH resource) in the fourth subframe after the subframe 1, that is, receive, in a subframe m = 5, the HARQ downlink PHICH feedback information corresponding to the PUSCH.

In Table 5, in a case in which K2 = 5, K3 = 6, K4 = 7, K5 = 8, and K6 = 9, when the UE transmits a PUSCH in a special subframe n = 1, the UE receives corresponding HARQ downlink PHICH feedback information in a specific subframe. With reference to the values of K in Table 5, a determining manner of the specific subframe is the same as that of K1 = 4, and details are not described herein again.

5. When an uplink-downlink subframe configuration is 4 and the current special subframe is a subframe n, determine that the PHICH resource is located in the $K^{th}$ subframe after the current special subframe n, where when n = 1, K = 4, 5, 6, 7, 8, or 9.

Specifically, when the user equipment UE transmits the PUSCH in the special subframe 1, correspondingly, it is determined that the PHICH resource is located in the $K^{th}$ subframe after the special subframe 1, where specific optional values of K may be shown in Table 6:

**Table 6**

| | Subframe | | | | | | | | | |
|---|---|---|---|---|---|---|---|---|---|---|
| | 0 | 1 | 2 | 3 | 4 | 5 | 6 | 7 | 8 | 9 |
| Subframe configuration 4 | D | S | U | U | D | D | D | D | D | D |
| K1 =4 | | 4 | | | | | | | | |
| K2 = 5 | | 5 | | | | | | | | |
| K3 = 6 | | 6 | | | | | | | | |
| K4 = 7 | | 7 | | | | | | | | |
| K5 = 8 | | 8 | | | | | | | | |
| K6 = 9 | | 9 | | | | | | | | |

In a specific subframe structure, for an UL/DL configuration 4 (uplink-downlink subframe configuration 4):
As shown in Table 6, in a case in which K1 = 4, for a PUSCH transmitted in a special subframe n = 1, the UE receives corresponding HARQ downlink PHICH feedback information (receives the PHICH on the determined PHICH resource) in the fourth subframe after the subframe 1, that is, receive, in a subframe m = 5, the HARQ downlink PHICH feedback information corresponding to the PUSCH.

In Table 6, in a case in which K2 = 5, K3 = 6, K4 = 7, K5 = 8, and K6 = 9, when the UE transmits a PUSCH in a special subframe n = 1, the UE receives corresponding HARQ downlink PHICH feedback information in a specific subframe. With reference to the values of K in Table 6, a determining manner of the specific subframe is the same as that of K1 = 4, and details are not described herein again.

6. When an uplink-downlink subframe configuration is 5 and the current special subframe is a subframe n, determine that the PHICH resource is located in the $K^{th}$ subframe after the current special subframe n, where when n = 1, K = 4, 5, 6, 7, 8, or 9.

Specifically, when the user equipment UE transmits the PUSCH in the special subframe n = 1, correspondingly, it is determined that the PHICH resource is located in the $K^{th}$ subframe after the special subframe 1, where specific optional values of K may be shown in Table 7:

**Table 7**

| | Subframe | | | | | | | | | |
|---|---|---|---|---|---|---|---|---|---|---|
| | 0 | 1 | 2 | 3 | 4 | 5 | 6 | 7 | 8 | 9 |
| Subframe configuration 5 | D | S | U | D | D | D | D | D | D | D |
| K1 =4 | | 4 | | | | | | | | |
| K2 = 5 | | 5 | | | | | | | | |
| K3 = 6 | | 6 | | | | | | | | |
| K4 = 7 | | 7 | | | | | | | | |
| K5 = 8 | | 8 | | | | | | | | |
| K6 = 9 | | 9 | | | | | | | | |

In a specific subframe structure, for an UL/DL configuration 5 (uplink-downlink subframe configuration 5):
As shown in Table 7, in a case in which K1 = 4, for a PUSCH transmitted in a special subframe n = 1, the UE receives corresponding HARQ downlink PHICH feedback information (receives the PHICH on the determined PHICH resource) in the fourth subframe after the subframe 1, that is, receive, in a subframe m = 5, the HARQ downlink PHICH feedback information corresponding to the PUSCH.

In Table 7, in a case in which K2 = 5, K3 = 6, K4 = 7, K5 = 8, and K6 = 9, when the UE transmits a PUSCH in a special subframe n = 1, the UE receives corresponding HARQ downlink PHICH feedback information in a specific subframe. A determining manner of the specific subframe is the same as that of K1 = 4, and details are not described herein again.

7. When an uplink-downlink subframe configuration is 6 and the current special subframe is a subframe n, determine that the PHICH resource is located in the K^th subframe after the current special subframe n, where

when n = 1 or 6, K = 4;
when n = 1 or 6, K = 5;
when n = 1 or 6, K = 8;
when n = 1 or 6, K = 9; or
when n = 1 or 6, K = 10.

Specifically, when the user equipment UE transmits the PUSCH in the special subframe 1, correspondingly, it is determined that the PHICH resource is located in the K^th subframe after the special subframe 1, where specific optional values of K may be shown in Table 8:

**Table 8**

| | Subframe | | | | | | | | | |
|---|---|---|---|---|---|---|---|---|---|---|
| | 0 | 1 | 2 | 3 | 4 | 5 | 6 | 7 | 8 | 9 |
| Subframe configuration 6 | D | S | U | U | U | D | S | U | U | D |
| K1 = 4 | | 4 | | | | | 4 | | | |
| K2 = 5 | | 5 | | | | | 5 | | | |
| K3 = 8 | | 8 | | | | | 8 | | | |
| K4 = 9 | | 9 | | | | | 9 | | | |
| K5 = 10 | | 10 | | | | | 10 | | | |

In a specific subframe structure, for an UL/DL configuration 6 (uplink-downlink subframe configuration 6):
As shown in Table 8, in a case in which K1 = 4, for a PUSCH transmitted in a special subframe n = 1, the UE receives corresponding HARQ downlink PHICH feedback information (that is, receives the PHICH on the determined PHICH resource) in the fourth subframe after the subframe n = 1, that is, receives, in a subframe m = 5, the HARQ downlink PHICH feedback information corresponding to the PUSCH; for a PUSCH transmitted in a subframe n = 6, the UE receives, in a subframe m = 0 in a next radio frame, the HARQ downlink PHICH feedback information corresponding to the PUSCH.
In Table 8, in a case in which K2 = 5, K3 = 8, K4 = 9, and K5 = 10, when the UE transmits a PUSCH in a special subframe n = 1 or 6, the UE receives corresponding HARQ downlink PHICH feedback information in a specific subframe. A determining manner of the specific subframe is the same as the of K1 = 4, and details are not described herein again.
In the foregoing embodiment, each configuration corresponds to multiple values of K for a reason the same as that of selecting the value of K for the configuration 0. The values of K selected for each configuration also have a beneficial effect the same as that of the values of K selected for the configuration 0, and details are not described herein.
In a case in which each of Table 2 to Table 8 provides one subframe configuration, there are multiple optional values of K. In a specific application environment, optional values of K in each table may be combined with values of K in another table to form seven uplink-downlink subframe configurations defined in the Long Term Evolution (LTE, Long Term Evolution) TDD system, where one uplink-downlink subframe configuration may be a combination shown in Table 9:

**Table 9**

| Subframe configuration | Subframe | | | | | | | | | |
|---|---|---|---|---|---|---|---|---|---|---|
| | 0 | 1 | 2 | 3 | 4 | 5 | 6 | 7 | 8 | 9 |
| 0 | | K=5 | 4 | 7 | 6 | | K=5 | 4 | 7 | 6 |
| 1 | | 4 | 4 | 6 | | | 4 | 4 | 6 | |
| 2 | | 5 | 6 | | | | 5 | 6 | | |
| 3 | | 6 | 6 | 6 | 6 | | | | | |
| 4 | | 6 | 6 | 6 | | | | | | |
| 5 | | 6 | 6 | | | | | | | |
| 6 | | 5 | 4 | 6 | 6 | | 5 | 4 | 7 | |

In an instance shown in Table 9, when the current special subframe is a subframe n, it is determined that the PHICH resource is located in the $K^{th}$ subframe after the current special subframe n, where in a configuration 0, n = 1 or 6, and K = 5; in a configuration 1, n = 1 or 6, and K = 4; in a configuration 2, n = 1 or 6, and K = 5; in a configuration 3, n = 1 and K = 6; in a configuration 4, n = 1 and K = 6; in a configuration 5, n= 1 and K = 6; and in a configuration 6, n = 1 or 6 and K =5.

II. When a subframe of the uplink resource used to transmit the PUSCH includes the current special subframe and another subframe, the determining, by the UE according to the uplink resource used to transmit the PUSCH, a subframe position of the PHICH resource corresponding to the PUSCH includes:

Further, the existing protocol Rel-11 further specifies: an uplink PUSCH may be transmitted in a subframe bundling (subframe bundling or TTI bundling) manner. A manner of bundling a UpPTS and another uplink resource is used to transmit the PUSCH, which is equivalent to increasing a quantity of times of transmitting the uplink data within unit time, thereby increasing a signal to noise ratio of uplink data receiving, and further increasing uplink coverage. In this embodiment of the present invention, when the subframe of the uplink resource used to transmit the PUSCH includes the current special subframe and a coordination subframe bundled with the current special subframe, the determining, by the UE according to the uplink resource used to transmit the PUSCH, a subframe position of the PHICH resource corresponding to the PUSCH includes:

determining, according to the coordination subframe, the subframe position of the PHICH resource corresponding to the PUSCH.

In this embodiment of the present invention, the coordination subframe refers to: when the special subframe used to transmit the PUSCH is bundled with another subframe, another subframe in the bundle subframe except the special subframe used to transmit the PUSCH.

The coordination subframe includes at least one uplink subframe in a radio frame of the current special subframe and/or another special subframe in the radio frame except the current special subframe.

Further, to comprehensively consider the transmission delay and the eNB processing time, and consider the transmission delay and the UE processing time, a current RTT value (that is, a time from when a data packet is transmitted for the first time to when the data packet is retransmitted) is reused as far as possible or an additional RTT value as smaller as possible is added. Therefore, in this embodiment of the present invention, the determining, by the UE according to the uplink resource used to transmit the PUSCH, a subframe position of the PHICH resource corresponding to the PUSCH includes:

determining, according to the last subframe L in the coordination subframe, the subframe position of the PHICH resource corresponding to the PUSCH.

Specifically, with reference to the seven uplink-downlink subframe configurations that are defined in the LTE TDD system and that are shown in Table 1, the following describes in detail an implementable solution of determining, in each configuration according to the last subframe L in the coordination subframe, the subframe position of the PHICH resource corresponding to the PUSCH:

Because for different configurations, positions and quantities of uplink subframes are different, during specific bundling, there may be multiple cases. The following gives a description according to different bundling cases.

Manner 1: All uplink subframes and special subframes in one radio frame are bundled to form one bundle subframe, and one bundle subframe corresponds to one HARQ process. Specific implementation may be:

1. If an uplink-downlink subframe configuration is 0, when special subframes 1 and 6 in a radio frame are bundled with subframes 2, 3, 4, 7, 8, and 9 in the radio frame, determine that the PHICH resource is located in the $K^{th}$ subframe after the last subframe L, where L = 9 and K = 6.

Specifically, when the user equipment UE transmits the PUSCH in the special subframe 1 or 6, correspondingly, it is determined that the PHICH resource is located in the $K^{th}$ subframe after the last subframe L of the bundle subframe, where specific optional values of K may be shown in Table 10:

**Table 10**

| | Subframe number | | | | | | | | | |
|---|---|---|---|---|---|---|---|---|---|---|
| | 0 | 1 | 2 | 3 | 4 | 5 | 6 | 7 | 8 | 9 |
| Subframe configuration 0 | D | S | U | U | U | D | S | U | U | U |
| | | | | | | | | | | 6 |

In Table 10, subframes 1, 2, 3, 4, 6, 7, 8, and 9 marked with slashes are bundled to transmit data.

As shown in Table 10, the uplink-downlink subframe configuration is 0, when special subframes 1 and 6 in one radio frame are bundled with subframes 2, 3, 4, 7, 8, and 9 in the radio frame, for a PUSCH transmitted in the special subframe 1, the UE receives corresponding HARQ downlink PHICH feedback information in the sixth subframe after the subframe 9, that is, receives, in a subframe 5 in a next radio frame, the HARQ downlink PHICH feedback information corresponding to the PUSCH.

In this embodiment, when the special subframes 1 and 6 are bundled with the subframes 2, 3, 4, 7, 8, and 9 in the radio frame, the bundled subframes may be considered as an entirety; therefore, a subframe position, used to receive the PHICH, in the original subframe 9 may be reused as the PUSCH sent by using the special subframe. In this case, a smallest change may be made to the protocol. A time interval from when the PUSCH is transmitted to when the PHICH is received is a smallest value when the processing time (3 ms) of the base station is the smallest, which effectively reduces the transmission delay. In addition, the bundling manner may implement PUSCH transmission of three HARQ processes and/or of an RTT being 30 ms. For a delay-sensitive service such as VOIP (Voice over Internet Protocol, Voice over Internet Protocol), a transmission delay generally needs to be about 50 ms, and an RTT value of an HARQ process is set to 30 ms, which can increase a time diversity gain for transmission of the delay-sensitive service. Quantities of UpPTSs included in the HARQ processes are the same, which reduces the complexity that the system (UE or base station) coordinates processing the HARQ processes.

2. If an uplink-downlink subframe configuration is 1, when special subframes 1 and 6 in a radio frame are bundled with subframes 2, 3, 7, and 8 in the radio frame, determine that the PHICH resource is located in the $K^{th}$ subframe after the last subframe L, where L = 8 and K = 6.

In this embodiment, when the special subframe 1 and 6 are bundled with the subframes 2, 3, 7, and 8 in the radio frame, the bundled subframes may be considered as an entirety; therefore, the subframe position, used to receive the PHICH, in the original subframe 8 may be reused for the PUSCH sent by using the special subframe. A time interval from when the PUSCH is transmitted to when the PHICH is received is a smallest value when processing time (3 ms) of the base station is the smallest, which effectively reduces the transmission delay. In addition, this bundling manner may implement PUSCH transmission, of two HARQ processes, having an RTT being 20 ms or PUSCH transmission, of three HARQ processes, having an RTT being 30 ms. For a delay-sensitive service such as VOIP, a transmission delay generally needs to be about 50 ms, and an RTT value of the HARQ process is set to 20 ms or 30 ms, which can effectively increase a time diversity gain for transmission of the delay-sensitive service. In addition, quantities of UpPTSs included in the HARQ processes are the same, which reduces the complexity that the system (UE or base station) coordinates processing the HARQ processes.

3. If an uplink-downlink subframe configuration is 2, when special subframes 1 and 6 in a radio frame are bundled with subframes 2 and 7 in the radio frame, determine that the PHICH resource is located in the $K^{th}$ subframe after the last subframe L, where L = 7 and K = 6, 9, or 19.

In this embodiment, it is determined that the PHICH resource is located in the sixth subframe after the current special subframe, and a time interval from when the PUSCH is transmitted to when the PHICH is received is a smallest value when processing time (3 ms) of the base station is the smallest, which effectively reduces the transmission delay.

For PUSCH transmission whose RTT is 20 ms when K = 6 or 9 or PUSCH transmission whose RTT is 30 ms when K 19, for a delay-sensitive service such as VOIP, a transmission delay generally needs to be about 50 ms, and an RTT value of the HARQ process is set to 20 ms or 30 ms, which can effectively increase a time diversity gain for transmission of the delay-sensitive service. In addition, quantities of UpPTSs included in the HARQ processes are the same, which reduces the complexity that the system (UE or base station) coordinates processing the HARQ processes.

4. If an uplink-downlink subframe configuration is 3, when a special subframe 1 in a radio frame is bundled with subframes 2, 3, and 4 in the radio frame, determine that the PHICH resource is located in the $K^{th}$ subframe after the last subframe L, where L = 4 and K = 16.

5. If an uplink-downlink subframe configuration is 4, when a special subframe 1 in a radio frame is bundled with subframes 2 and 3 in the radio frame, determine that the PHICH resource is located in the $K^{th}$ subframe after the last subframe L, where L = 4 and K = 6.

6. If an uplink-downlink subframe configuration is 5, when a special subframe 1 in a radio frame is bundled with a subframe 2 in the radio frame, determine that the PHICH resource is located in the $K^{th}$ subframe after the subframe 2, where K = 5, 15, or 25.

7. If an uplink-downlink subframe configuration is 6, when special subframes 1 and 6 in a radio frame are bundled with subframes 2, 3, 4, 7, and 8 in the radio frame, determine that the PHICH resource is located in the $K^{th}$ subframe after the last subframe L, where L = 8 and K = 17.

Manner 2: When one radio frame includes two special subframes, each special subframe may form one bundle subframe, and bundle subframes separately correspond to different HARQ processes, specific implementation may be:

1. If an uplink-downlink subframe configuration is 2, when a special subframe 1 in a radio frame and a subframe 2 in the radio frame are bundled to form a first bundle frame, and a special subframe 6 in the radio frame and a subframe 7 in the radio frame are bundled to form a second bundle frame, the determining, according to the last subframe L in the coordination subframe, the subframe position of the PHICH resource corresponding to the PUSCH includes:

a first PHICH resource corresponding to the first bundle frame is located in the K1th subframe after the last subframe L, where L = 2 and K1 = 4; and

a second PHICH resource corresponding to the second bundle frame is located in the K2th subframe after the last subframe L, where L = 7 and K2 = 4.

Specifically, when the user equipment UE transmits the PUSCH in the special subframe 1 or 6, correspondingly, it is determined that the PHICH resource is located in the Kth subframe after the last subframe L of the bundle subframe, where specific optional values of K may be shown in Table 11:

**Table 11**

| Subframe configuration | Subframe number | | | | | | | | | |
|---|---|---|---|---|---|---|---|---|---|---|
| | 0 | 1 | 2 | 3 | 4 | 5 | 6 | 7 | 8 | 9 |
| | D | S | U | D | D | D | S | U | D | D |
| 2 | | | 4 | | | | | 4 | | |

In Table 11, subframes 1 and 2 marked by horizontal lines are bundled to form a first bundle frame, and subframes 6 and 7 marked with vertical lines are bundled to form a second bundle frame.

As shown in Table 11, the uplink-downlink subframe configuration is 2, when a special subframe 1 in a radio frame and a subframe 2 in the radio frame are bundled to form a first bundle frame, for a PUSCH transmitted in the special subframe 1, the UE receives corresponding HARQ downlink PHICH feedback information in the fourth subframe after the subframe 2, that is, receives, in a subframe 6 in the radio frame, the HARQ downlink PHICH feedback information corresponding to the PUSCH transmitted in the special subframe 1; and

when a special subframe n = 6 in a radio frame and a subframe m = 7 in the radio frame are bundled to form a second bundle frame, for a PUSCH transmitted in the special subframe n = 6, the UE receives corresponding HARQ downlink PHICH feedback information in the fourth subframe after the subframe 7, that is, receives, in a subframe 1 in a next radio frame, the HARQ downlink PHICH feedback information corresponding to the PUSCH transmitted in the special subframe 6.

2. If an uplink-downlink subframe configuration is 3, when a special subframe 1 in a radio frame and subframes 2 and 3 in the radio frame are bundled to form a first bundle frame, a subframe 4 in the radio frame, a special subframe 1 in a next radio frame, and a subframe 2 in the next radio frame are bundled to form a second bundle frame, and subframes 3 and 4 in the next radio frame are bundled to form a third bundle frame, the determining, according to the last subframe L in the coordination subframe, the subframe position of the PHICH resource corresponding to the PUSCH includes:

a first PHICH resource corresponding to the first bundle frame is located in the Kth subframe after the last subframe L, where L = 3 and K = 6;

a second PHICH resource corresponding to the second bundle frame is located in the Kth subframe after the last subframe L, where L = 2 and K = 6; and

a third PHICH resource corresponding to the third bundle frame is located in the Kth subframe after the last subframe L, where L = 4 and K = 6.

In this embodiment, when a special subframe is bundled with another subframe in the radio frame, the bundled subframes may be considered as an entirety; therefore, the subframe position, used to receive the PHICH, in the original subframe 8 may be reused for the PUSCH sent by using the special subframe. A time interval from when the PUSCH is transmitted to when the PHICH is received is a smallest value when processing time (3 ms) of the base station is the smallest, which effectively reduces the transmission delay.

After the UE determines the subframe position of the PHICH resource corresponding to the PUSCH, PHICH information corresponding to the PUSCH may be determined uniquely by using the following formula according to the PHICH group number and an orthogonal sequence number ( $n_{PHICH}^{group}$ , $n_{PHICH}^{seq}$ ) of the PHICH in the group and is separated:

$$n_{PHICH}^{group} = (I_{PRB\_RA} + n_{DMRS}) \bmod N_{PHICH}^{group} + I_{PHICH} N_{PHICH}^{group}$$

$$n_{PHICH}^{seq} = (\lfloor I_{PRB\_RA} / N_{PHICH}^{group} \rfloor + n_{DMRS}) \bmod 2N_{SF}^{PHICH}$$

where $n_{DMRS}$ is a demodulation reference signal cyclic shift value, $I_{PRB\_RA}$ is a lowest index (lowest index) of a resource block, $N_{SF}^{PHICH}$ is a length of a PHICH spreading factor, and $N_{PHICH}^{group}$ is a PHICH group quantity.

In the method provided in this embodiment of the present invention, a time frequency domain of the PHICH resource is further determined. In the method, the PHICH group number of the PHICH resource is further determined according to the subframe position, which specifically includes:

determining, according to the subframe position corresponding to the PHICH resource and by using a PHICH group number indication factor $I_{PHICH}$, the PHICH group number corresponding to the PUSCH.

In a specific instance, the determining the PHICH group number of the PHICH resource according to the subframe position includes:

A. Determining of the $I_{PHICH}$ in this embodiment of the present invention is further described in detail by using an instance shown in Table 12.

**Table 12**

| Subframe configuration | Subframe number | | | | | | | | | |
|---|---|---|---|---|---|---|---|---|---|---|
| | 0 | 1 | 2 | 3 | 4 | 5 | 6 | 7 | 8 | 9 |
| 0 | | 5 | 4 | 7 | 6 | | 5 | 4 | 7 | 6 |

As can be known from Table 12, for a UL/DL configuration 0, the special subframe 1 or 6 is used to transmit a PUSCH, and a PHICH resource corresponding to the PUSCH is located in the fifth subframe after the special subframe; then, in this case:

In the configuration UL/DL configuration 0, an example of a case in which a same subframe corresponds to PHICH resources of different PUSCHs is:

a. For PUSCHs transmitted in a special subframe 1 and an uplink subframe 2, corresponding PHICHs are received in a subframe 6.

To distinguish PHICH resources, corresponding to different PUSCHs, in a same subframe, it is specified that a PHICH group number indication factor of the PHICH resource corresponding to the PUSCH transmitted in the subframe 1 or 2 is $I_{PHICH} = 1$.

a. For PUSCHs transmitted in a special subframe 6 and an uplink subframe 7, corresponding PHICHs are received in a subframe 1.

To distinguish PHICH resources, corresponding to different PUSCHs, in a same subframe, it is specified that a PHICH group number indication factor of the PHICH resource corresponding to the PUSCH transmitted in the subframe 6 or 7 is $I_{PHICH} = 1$.

Based on the foregoing case, it may be specified that PHICH group number indication factors of the PHICH resources corresponding to the PUSCHs transmitted in the subframes 2 and 7 are $I_{PHICH} = 1$; or it may be specified that PHICH group number indication factors of the PHICH resources corresponding to the PUSCHs transmitted in the subframes 1 and 6 are $I_{PHICH} = 1$. In addition, in the configuration, downlink PHICHs corresponding to the subframes 3 and 4 are transmitted in a same subframe, and downlink PHICHs corresponding to the subframes 8 and 9 are transmitted in a same subframe.

In the configuration, for the four groups of subframes {1, 2}, {3, 4}, {6, 7}, and {8, 9}, the downlink PHICHs are received in a same subframe. To distinguish PHICH resources, corresponding to different PUSCHs, in a same subframe, in the method provided in this embodiment of the present invention, $I_{PHICH} = 1$ of the PHICH resource corresponding to one subframe is selected from each group of subframes, and there are two options for each group of subframes. Under the premise that the foregoing case exists in four groups of subframes in the configuration, there are 16 implementation manners for forming $I_{PHICH}$ in the configuration. In addition, a value of $I_{PHICH}$ corresponding to an original subframe is reused as far as possible or a value of $I_{PHICH}$ corresponding to an original subframe is changed as less as possible. Values of $I_{PHICH}$ are selected according to the foregoing rule. To simplify the description, two manners of forming a value of $I_{PHICH}$ are specifically described below.

Manner 1: Based on the foregoing case, in implementation of the present invention, when an uplink-downlink subframe configuration is 0, the current special subframe is a subframe n, and the PHICH resource is located in the K<sup>th</sup> subframe after the special subframe n, where when n = 1 or 6, K = 5, determine that PHICH group number indication factors $I_{PHICH}$ corresponding to subframes 2, 4, 7, and 9 are 1, and $I_{PHICH}$ corresponding to another subframe in the radio frame of the current special subframe except the subframes 2, 4, 7, and 9 is 0, and determine, by using the determined $I_{PHICH}$, the PHICH group number corresponding to the PUSCH.

In an actual application environment, the foregoing implementation manner 1 may further be expressed by using a specific formula. The specific formula may be:

$$I_{PHICH} = \begin{cases} 1 & \text{for TDD UL/DL configuration 0 with PUSCH transmission} \\ & \text{in subframe m} = 2, 4, 7 \text{ or } 9 \\ 0 & \text{otherwise} \end{cases}$$

Manner 2: When an uplink-downlink subframe configuration is 0, the current special subframe is a subframe n, and the PHICH resource is located in the K<sup>th</sup> subframe after the special subframe n, where when n = 1 or 6, K = 5, determine that PHICH group number indication factors $I_{PHICH}$ corresponding to subframes 1, 6, 4, and 9 are 1, and $I_{PHICH}$ corresponding to another subframe in the radio frame of the current special subframe except the subframes 1, 6, 4, and 9 is 0, and determine, by using the determined $I_{PHICH}$, the PHICH group number corresponding to the PUSCH.

In an actual application environment, the foregoing implementation manner 2 may further be expressed by using a specific formula. The specific formula may be:

$$I_{PHICH} = \begin{cases} 1 & \text{for TDD UL/DL configuration 0 with PUSCH transmission} \\ & \text{in subframe } m = 1, 4, 6 \text{ or } 9 \\ 0 & \text{otherwise} \end{cases}$$

In addition, for a UL/DL configuration 6, the special subframe 1 or 6 is used to transmit a PUSCH, and a PHICH resource corresponding to the PUSCH is located in the fourth subframe after the special subframe; then, in this case:

   a. For a PUSCH transmitted in a special subframe 1 and a PUSCH transmitted in an uplink subframe 8 in a previous radio frame, corresponding downlink PHICHs are received in a subframe 5.

To distinguish PHICH resources, corresponding to different PUSCHs, in a same subframe, it is specified that a PHICH group number indication factor of the PHICH resource corresponding to the PUSCH transmitted in the subframe 1 or corresponding to the PUSCH transmitted in the subframe 8 in the previous radio frame is $I_{PHICH}$ = 1.
   b. For PUSCHs transmitted in an uplink subframe 4 and a special subframe 6, corresponding PHICHs are received in a subframe 0 in a next radio frame.

To distinguish PHICH resources, corresponding to different PUSCHs, in a subframe 0, it is specified that a PHICH group number indication factor of the PHICH resource corresponding to the PUSCH transmitted in the subframe 4 or 6 is $I_{PHICH}$ = 1.

Based on the foregoing case, it may be specified that PHICH group number indication factors of the PHICH resources corresponding to the PUSCHs transmitted in the subframes 6 and 8 are $I_{PHICH}$ = 1; or it may be specified that PHICH group number indication factors of the PHICH resources corresponding to the PUSCHs transmitted in the subframes 1 and 4 are $I_{PHICH}$ = 1 .

Based on the foregoing case, in the implementation of the present invention, when an uplink-downlink subframe configuration is 6, the current special subframe is a subframe n, and the PHICH resource is located in the K<sup>th</sup> subframe after the special subframe n, where when n = 1 or 6, K = 4, determine that PHICH group number indication factors $I_{PHICH}$ corresponding to subframes 6 and 8 are 1, and $I_{PHICH}$ corresponding to another subframe in the radio frame of the current special subframe except the subframes 6 and 8 is 0, and determine, by using the determined $I_{PHICH}$, the PHICH group number corresponding to the PUSCH; or

when an uplink-downlink subframe configuration is 6, the current special subframe is a subframe n, and the PHICH resource is located in the $K^{th}$ subframe after the special subframe n, where when n = 1 or 6, K = 4, determine that PHICH group number indication factors $I_{PHICH}$ corresponding to subframes 1 and 4 are 1, and $I_{PHICH}$ corresponding to another subframe in the radio frame of the current special subframe except the subframes 1 and 4 is 0, and determine, by using the determined $I_{PHICH}$, the PHICH group number corresponding to the PUSCH.

**Embodiment 2**

In this embodiment of the present invention, considering that in one RTT period, timing from an uplink PUSCH to a downlink PHICH is not less than 4 ms, and in HARQ retransmission, a time from when UE receives a PHICH to when the UE sends a PUSCH is not less than 4 ms, the following provides an instance in which an RTT is 10 ms.

When the user equipment UE transmits a PUSCH in a special subframe, correspondingly, it is determined that the PHICH resource is located in the $K^{th}$ subframe after the special subframe, where in each configuration, specific optional values of K may be shown in Table 13:

**Table 13**

| Subframe configuration | Subframe | | | | | | | | | |
|---|---|---|---|---|---|---|---|---|---|---|
| | 0 | 1 | 2 | 3 | 4 | 5 | 6 | 7 | 8 | 9 |
| 0 | | 5 | 4 | 7 | 6 | | 5 | 4 | 7 | 6 |
| 1 | | 4 | 4 | 6 | | | 4 | 4 | 6 | |
| 2 | | 5 | 6 | | | | 5 | 6 | | |
| 3 | | 6 | 6 | 6 | 6 | | | | | |
| 4 | | 6 | 6 | 6 | | | | | | |
| 5 | | 6 | 6 | | | | | | | |
| 6 | | 5 | 4 | 6 | 6 | | 5 | 4 | 7 | |

In this embodiment, according to a specific instance given in Table 13, the current special subframe is a subframe n, and specific implementation of determining that the PHICH resource is located in the $K^{th}$ subframe after the current special subframe n includes:

<1>. For a DL/UL configuration 0, for a PUSCH transmitted in a special subframe n = 1, the UE receives corresponding HARQ downlink PHICH feedback information in the fifth subframe after the subframe 1, that is, receives, in a special subframe n = 6, the HARQ downlink PHICH feedback information corresponding to the PUSCH; for a PUSCH transmitted in the special subframe n = 6, the UE receives corresponding HARQ downlink PHICH feedback information (that is, the UE receives, in a special subframe n = 1 in a next radio frame, the HARQ downlink PHICH feedback information corresponding to the PUSCH) in the fifth subframe after the subframe 6.

<2>. For a DL/UL configuration 1, for a PUSCH transmitted in a special subframe n = 1, the UE receives corresponding HARQ downlink PHICH feedback information in the fourth subframe after the subframe 1 (receives the PHICH on the determined PHICH resource), that is, receives, in a special subframe m = 5, the HARQ downlink PHICH feedback information corresponding to the PUSCH; for a PUSCH transmitted in a special subframe n = 6, the UE receives corresponding HARQ downlink PHICH feedback information in the fourth subframe after the subframe 6, that is, the UE receives, in a special subframe m = 0 in a next radio frame, the HARQ downlink PHICH feedback information corresponding to the PUSCH.

<1>. For a DL/UL configuration 2, for a PUSCH transmitted in a special subframe n = 1, the UE receives corresponding HARQ downlink PHICH feedback information in the fifth subframe after the subframe 1 (receives the PHICH on the determined PHICH resource), that is, receives, in a special subframe 6, the HARQ downlink PHICH feedback information corresponding to the PUSCH; for a PUSCH transmitted in the special subframe n = 6, the UE receives corresponding HARQ downlink PHICH feedback information in the fifth subframe after the subframe 6, that is, the UE receives, in a special subframe 1 in a next radio frame, the HARQ downlink PHICH feedback information corresponding to the PUSCH.

<1>. For a UL/DL configuration 3, for a PUSCH transmitted in a special subframe n = 1, the UE receives corresponding HARQ downlink PHICH feedback information (receives the PHICH on the determined PHICH resource) in the sixth subframe after the subframe 1, that is, the UE receives, in a subframe 7, the HARQ downlink PHICH feedback information corresponding to the PUSCH.

<1>. For a UL/DL configuration 4, for a PUSCH transmitted in a special subframe n = 1, the UE receives corresponding HARQ downlink PHICH feedback information (receives the PHICH on the determined PHICH resource) in the sixth subframe after the subframe 1, that is, receives, in a subframe 7, the HARQ downlink PHICH feedback information corresponding to the PUSCH.

<1>. For a UL/DL configuration 5, for a PUSCH transmitted in a special subframe n = 1, the UE receives corresponding HARQ downlink PHICH feedback information (receives the PHICH on the determined PHICH resource) in the sixth subframe after the subframe 1, that is, receives, in a subframe 7, the HARQ downlink PHICH feedback information corresponding to the PUSCH.

<1>. For a DL/UL configuration 6, for a PUSCH transmitted in a special subframe n = 1, the UE receives corresponding HARQ downlink PHICH feedback information in the fifth subframe after the subframe 1, that is, receives, in a subframe n = 6, the HARQ downlink PHICH feedback information corresponding to the PUSCH; for a PUSCH transmitted in the special subframe n = 6, the UE receives corresponding HARQ downlink PHICH feedback information (that is, the UE receives, in a special subframe n = 1 in a next radio frame, the HARQ downlink PHICH feedback information corresponding to the PUSCH) in the fifth subframe after the subframe 6.

By means of the method in this embodiment of the present invention, after the subframe position of the PHICH resource corresponding to the PUSCH is determined, a time frequency domain of the PHICH resource is further determined. Then, in this method, the determining, by using $I_{PHICH}$ according to the subframe position corresponding to the PHICH resource, the PHICH group number corresponding to the PUSCH may be:

For a subframe configuration 0, downlink PHICHs corresponding to four pairs of subframes are transmitted in a same subframe, where the four pairs of subframes are respectively: 1 and 2, 3 and 4, 6 and 7, and 8 and 9; therefore, in this embodiment, a PHICH group number indication factor of a PHICH resource corresponding to a PUSCH transmitted in either subframe in each pair of subframes may be $I_{PHICH} = 1$ . In this instance, it may be specified that $I_{PHICH}$ corresponding to the subframe m = 2, 4, 7, and 9 is 1, and $I_{PHICH}$ corresponding to another subframe in a radio frame of the current special subframe except the subframe m = 2, 4, 7, and 9 is 0.

For a subframe configuration 6, downlink PHICHs corresponding to two pairs of subframes are transmitted in a same subframe, where the two pairs of subframes are respectively 1 and 8, and 4 and 6. Therefore, in this embodiment, a PHICH group number indication factor of a PHICH resource corresponding to a PUSCH transmitted in either subframe in each pair of subframes may be $I_{PHICH} = 1$. In this instance, it may be specified that PHICH group number indication factors $I_{PHICH}$ corresponding to the subframes 1 and 6 is 1, and $I_{PHICH}$ corresponding to another subframe in the radio frame of the current special subframe except the subframes 1 and 6 is 0. The formula of the value of $I_{PHICH}$ may be:

$$I_{PHICH} = \begin{cases} 1 & \text{for TDD UL/DL configuration 0 with PUSCH transmission} \\ & \text{in subframe } m = 2, 4, 7 \text{ or } 9, \text{ and for TDD UL/DL configuration 6} \\ & \text{with PUSCH transmission in subframe } n = 1 \text{ or } 6 \\ 0 & \text{otherwise} \end{cases}$$

Correspondingly, the present invention specifies a value of $m_i$ (representing a group quantity range factor of the PHICH) for the PHICH group quantity $m_i \cdot N_{PHICH}^{group}$ :

for a UL/DL configuration 0, because a PHICH resource is added in subframes 1 and 6, $m_i = 2$.

$m_i = 2$; for a UL/DL configuration 6, because a PHICH resource is added in subframes 1 and 6,

for a UL/DL configuration 1, because a PHICH resource is added in subframes 0 and 5, $m_i = 1$.

for a UL/DL configuration 2, because a PHICH resource is added in subframes 1 and 6, $m_i = 1$; and

similarly, for UL/DL configurations 3 to 5, because a PHICH resource is added in a subframe 7, $m_i = 1$.

The PHICH resources in other subframes are unchanged, and in this embodiment, values of $m_i$ in each configuration may be shown in Table 14.

**Table 14**

| Uplink-downlink configuration | Subframe | | | | | | | | | |
|---|---|---|---|---|---|---|---|---|---|---|
| | 0 | 1 | 2 | 3 | 4 | 5 | 6 | 7 | 8 | 9 |
| 0 | $m_i = 2$ | $m_i = 2$ | - | - | - | $m_i = 2$ | $m_i = 2$ | - | - | - |
| 1 | 1 | 1 | - | - | 1 | 1 | 1 | - | - | 1 |
| 2 | 0 | 1 | - | 1 | 0 | 0 | 1 | - | 1 | 0 |
| 3 | 1 | 0 | - | - | - | 0 | 0 | 1 | 1 | 1 |
| 4 | 0 | 0 | - | - | 0 | 0 | 0 | 1 | 1 | 1 |
| 5 | 0 | 0 | - | 0 | 0 | 0 | 0 | 1 | 1 | 0 |
| 6 | 1 | 2 | - | - | - | 1 | 2 | - | - | 1 |

**Embodiment 3**

When a subframe of an uplink resource used to transmit a PUSCH includes a current special subframe and another subframe, that is, a special subframe and another normal subframe are bundled for transmission, in this embodiment, a timing relationship of each configuration when RTT = 30 ms may be specifically:

for a UL/DL configuration 0, if special subframes 1 and 6 and normal subframes 2, 3, 4, 7, 8, and 9 are bundled as a bundle subframe (bundle) to transmit a PUSCH, a receiving position of a downlink PHICH corresponding to the bundle subframe is associated with the last subframe 9 in the bundle, $k_{PHICH}$ = 6, and a receiving position is a subframe 5 in a next radio frame;

for a UL/DL configuration 1, if special subframes 1 and 6 and normal subframes 2, 3, 7, and 8 are bundled as a bundle subframe (bundle) to transmit a PUSCH, a receiving position of a downlink PHICH corresponding to the bundle subframe is associated with the last subframe 8 in the bundle, $k_{PHICH}$ = 6, and a receiving position is a subframe 4 in a next radio frame;

for a UL/DL configuration 2, if special subframes 1 and 6 and normal subframes 2 and 7 are bundled as a bundle subframe (bundle) to transmit a PUSCH, a receiving position of a downlink PHICH corresponding to the bundle subframe is associated with the last subframe 7 in the bundle, $k_{PHICH}$ = 19, and a receiving position is a subframe 6 in the second radio frame after the frame;

for a UL/DL configuration 3, a special subframe 1 and normal subframes 2, 3, and 4 are bundled as a bundle subframe (bundle) to transmit a PUSCH, a receiving position of a downlink PHICH corresponding to the bundle subframe is associated with the last subframe 4 in the bundle, $k_{PHICH}$ = 16, and a receiving position is a subframe 0 in the second radio frame after the frame;

for a UL/DL configuration 4, a special subframe 1 and normal subframes 2 and 3 are bundled as a bundle subframe (bundle) to transmit a PUSCH, a receiving position of a downlink PHICH corresponding to the bundle subframe is associated with the last subframe 3 in the bundle, $k_{PHICH}$ = 6, and a receiving position is a subframe 9;

for a UL/DL configuration 5, a special subframe 1 and a normal subframe 2 are bundled as a bundle subframe (bundle) to transmit a PUSCH; then, a receiving position of a downlink PHICH corresponding to the bundle subframe is associated with the last subframe 2 in the bundle, $k_{PHICH}$ = 25 , and a receiving position is a subframe 7 in the second radio frame after the frame; and

for a UL/DL configuration 6, special subframes 1 and 6 and normal subframes 2, 3, 4, 7, and 8 are bundled as a bundle subframe (bundle) to transmit a PUSCH, a receiving position of a downlink PHICH corresponding to the bundle subframe is associated with the last subframe 8 in the bundle, $k_{PHICH}$ =17, and a receiving position is a subframe 5 in the second radio frame after the frame.

Specific optional values of the K determined according to the foregoing method may be shown in Table 15:

**Table 15**

| Subframe configuration | Subframe | | | | | | | | | |
|---|---|---|---|---|---|---|---|---|---|---|
| | 0 | 1 | 2 | 3 | 4 | 5 | 6 | 7 | 8 | 9 |
| 0 | | | | | | | | | | 6 |

(continued)

| Subframe configuration | Subframe | | | | | | | | | |
|---|---|---|---|---|---|---|---|---|---|---|
| | 0 | 1 | 2 | 3 | 4 | 5 | 6 | 7 | 8 | 9 |
| 1 | | | | | | | | | 6 | |
| 2 | | | | | | | | 19 | | |
| 3 | | | | | 16 | | | | | |
| 4 | | | | 6 | | | | | | |
| 5 | | | 25 | | | | | | | |
| 6 | | | | | | | | | 17 | |

## Embodiment 4

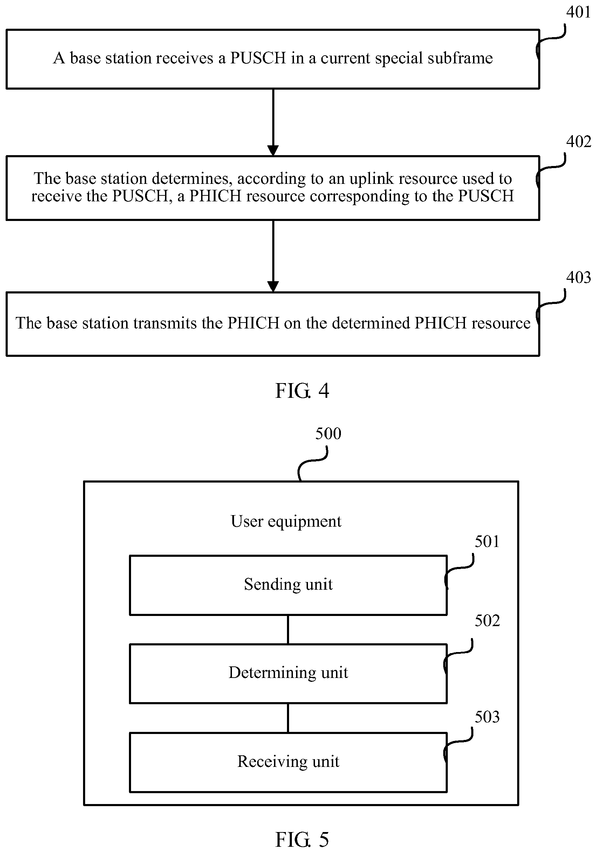

After user equipment transmits uplink data in a special subframe, a base station side needs to determine feedback information corresponding to the uplink data transmitted in a particular subframe; therefore, based on this idea, this embodiment of the present invention further provides another control channel resource allocation method. The method includes (a process of the method is shown in FIG. 4):

Step 401: Abase station receives a PUSCH in a current special subframe.
Step 402: The base station determines, according to an uplink resource used to receive the PUSCH, a PHICH resource corresponding to the PUSCH, where the uplink resource used to transmit the PUSCH includes the current special subframe.

In this embodiment of the present invention, the determining, by the base station according to an uplink resource used to receive the PUSCH, a PHICH resource corresponding to the PUSCH includes:

determining, by the base station according to the uplink resource used to receive the PUSCH, a subframe position of the PHICH resource corresponding to the PUSCH; and
determining a PHICH group number of the PHICH resource according to the subframe position, and determining, according to the subframe position and the PHICH group number, the PHICH resource corresponding to the PUSCH.

Step 403: The base station transmits a PHICH on the determined PHICH resource.
According to the foregoing method, the following describes in detail the method provided in this embodiment of the present invention with reference to tables and various uplink-downlink subframe configurations.

I. When a subframe of the uplink resource used to transmit the PUSCH is only the current special subframe, the determining, by the base station according to the uplink resource used to receive the PUSCH, a subframe position of the PHICH resource corresponding to the PUSCH includes:

specifically, with reference to seven uplink-downlink subframe configurations that are defined in the LTE (LTE, Long Term Evolution) TDD system and that are shown in Table 1, the following describes in detail an implementable solution of the PHICH resource in each configuration:

when an uplink-downlink subframe configuration is 0 and the current special subframe is a subframe n, determining that the PHICH resource is located in the $K^{th}$ subframe after the current special subframe n, where when n = 1 or 6, K = 5; or when n = 1 or 6, K = 10; or
when an uplink-downlink subframe configuration is 1 and the current special subframe is a subframe n, determining that the PHICH resource is located in the $K^{th}$ subframe after the current special subframe n, where

when n = 1 or 6, K = 4;
when n = 1 or 6, K = 5; or
when n = 1 or 6, K = 8; or
when an uplink-downlink subframe configuration is 2 and the current special subframe is a subframe n, determining that the PHICH resource is located in the $K^{th}$ subframe after the current special subframe n, where

when n = 1 or 6, K = 4;
when n = 1 or 6, K = 5;
when n = 1 or 6, K = 7; or
when n = 1 or 6, K = 8; or

when an uplink-downlink subframe configuration is 3 and the current special subframe is a subframe n, determining that the PHICH resource is located in the $K^{th}$ subframe after the current special subframe n, where when n = 1, K = 4, 5, 6, 7, 8, or 9; or

when an uplink-downlink subframe configuration is 4 and the current special subframe is a subframe n, determining that the PHICH resource is located in the $K^{th}$ subframe after the current special subframe n, where when n = 1, K = 4, 5, 6, 7, 8, or 9; or

when an uplink-downlink subframe configuration is 5 and the current special subframe is a subframe n, determining that the PHICH resource is located in the $K^{th}$ subframe after the current special subframe n, where when n = 1, K = 4, 5, 6, 7, 8, or 9; or

when an uplink-downlink subframe configuration is 6 and the current special subframe is a subframe n, determining that the PHICH resource is located in the $K^{th}$ subframe after the current special subframe n, where

when n = 1 or 6, K = 4; when n 1 or 6, K = 5; when n = 1 or 6, K =8; when n = 1 or 6, K = 9; or when n = 1 or 6, K = 10.

II. The existing protocol Rel-11 further specifies: an uplink PUSCH may be transmitted in a subframe bundling (subframe bundling or TTI bundling) manner. When a subframe of the uplink resource used to transmit the PUSCH includes the current special subframe and another subframe, the determining, by the base station according to the uplink resource used to receive the PUSCH, a subframe position of the PHICH resource corresponding to the PUSCH includes:

when a subframe of the uplink resource used to transmit the PUSCH includes the current special subframe and a coordination subframe bundled with the current special subframe, the determining, by the base station according to the uplink resource used to receive the PUSCH, a subframe position of the PHICH resource corresponding to the PUSCH includes:

determining, according to the coordination subframe, the subframe position of the PHICH resource corresponding to the PUSCH.

In this embodiment of the present invention, the coordination subframe includes at least one uplink subframe in a radio frame of the current special subframe and/or another special subframe in the radio frame except the current special subframe.

Further, to comprehensively consider a transmission delay and eNB processing time, and consider a transmission delay and UE processing time, in this embodiment of the present invention, the determining, by the base station according to the uplink resource used to receive the PUSCH, a subframe position of the PHICH resource corresponding to the PUSCH includes:

determining, according to the last subframe L in the coordination subframe, the subframe position of the PHICH resource corresponding to the PUSCH.

Specifically, with reference to the seven uplink-downlink subframe configurations that are defined in the LTE TDD system and that are shown in Table 1, the following describes in detail an implementable solution of determining, in each configuration according to the last subframe L in the coordination subframe, the subframe position of the PHICH resource corresponding to the PUSCH:

Because for different configurations, positions and quantities of uplink subframes are different, during specific bundling, there may be multiple cases. The following gives a description according to different bundling cases.

Manner 1: All uplink subframes in one radio frame are bundled to form one bundle subframe, and each bundle subframe corresponds to one HARQ process. Specific implementation may be:

if an uplink-downlink subframe configuration is 0, when special subframes 1 and 6 in a radio frame are bundled with subframes 2, 3, 4, 7, 8, and 9 in the radio frame, determining that the PHICH resource is located in the $K^{th}$ subframe after the last subframe L, where L = 9 and K = 6; or

if an uplink-downlink subframe configuration is 1, when special subframes 1 and 6 in a radio frame are bundled with subframes 2, 3, 7, and 8 in the radio frame, determining that the PHICH resource is located in the $K^{th}$ subframe after the last subframe L, where L = 8 and K = 6; or

if an uplink-downlink subframe configuration is 2, when special subframes 1 and 6 in a radio frame are bundled with subframes 2 and 7 in the radio frame, determining that the PHICH resource is located in the $K^{th}$ subframe after the last subframe L, where L = 7 and K = 6, 9, or 19; or

if an uplink-downlink subframe configuration is 3, when a special subframe 1 in a radio frame is bundled with subframes 2, 3, and 4 in the radio frame, determining that the PHICH resource is located in the $K^{th}$ subframe after the last subframe L, where L = 4 and K = 16; or

if an uplink-downlink subframe configuration is 5, when a special subframe 1 in a radio frame is bundled with a subframe 2 in the radio frame, determining that the PHICH resource is located in the $K^{th}$ subframe after the last subframe L, where L = 2 and K = 5, 15, or 25; or

if an uplink-downlink subframe configuration is 6, when special subframes 1 and 6 in a radio frame are bundled with subframes 2, 3, 4, 7, and 8 in the radio frame, determining that the PHICH resource is located in the $K^{th}$ subframe after the last subframe L, where L = 8 and K = 17.

Manner 2: When one radio frame includes two special subframes, each special subframe may form one bundle subframe, and bundle subframes separately correspond to different HARQ processes, specific implementation may be:

1. If an uplink-downlink subframe configuration is 2, when a special subframe 1 in a radio frame and a subframe 2 in the radio frame are bundled to form a first bundle frame, and a special subframe 6 in the radio frame and a subframe 7 in the radio frame are bundled to form a second bundle frame, the determining, according to the last subframe L in the coordination subframe, the subframe position of the PHICH resource corresponding to the PUSCH includes:

a first PHICH resource corresponding to the first bundle frame is located in the $K^{th}$ subframe after the last subframe L, where L = 2 and K1 = 4; and

a second PHICH resource corresponding to the second bundle frame is located in the $K^{th}$ subframe after the last subframe L, where L = 7 and K2 = 4.

2. If an uplink-downlink subframe configuration is 3, when a special subframe 1 in a radio frame and subframes 2 and 3 in the radio frame are bundled to form a first bundle frame, a subframe 4 in the radio frame, a special subframe 1 in a next radio frame, and a subframe 2 in the next radio frame are bundled to form a second bundle frame, and subframes 3 and 4 in the next radio frame are bundled to form a third bundle frame, the determining, according to the last subframe L in the coordination subframe, the subframe position of the PHICH resource corresponding to the PUSCH includes:

a first PHICH resource corresponding to the first bundle frame is located in the $K^{th}$ subframe after the last subframe L, where L = 3 and K = 6;

a second PHICH resource corresponding to the second bundle frame is located in the $K^{th}$ subframe after the last subframe L, where L = 2 and K = 6; and

a third PHICH resource corresponding to the third bundle frame is located in the $K^{th}$ subframe after the last subframe L, where L = 4 and K = 6.

After the base station determines the subframe position of the PHICH resource corresponding to the PUSCH, PHICH information corresponding to the base station may be determined uniquely by using the following formula according to the PHICH group number and an orthogonal sequence number ($n_{PHICH}^{group}$, $n_{PHICH}^{seq}$) of the PHICH in the group and is separated:

$$n_{PHICH}^{group} = (I_{PRB\_RA} + n_{DMRS}) \bmod N_{PHICH}^{group} + I_{PHICH} N_{PHICH}^{group}$$

$$n_{PHICH}^{seq} = (\lfloor I_{PRB\_RA} / N_{PHICH}^{group} \rfloor + n_{DMRS}) \bmod 2N_{SF}^{PHICH}$$

In the method provided in this embodiment of the present invention, a time frequency domain of the PHICH resource is further determined. In the method, the PHICH group number of the PHICH resource is further determined according to the subframe position, which specifically includes:

determining, according to the subframe position corresponding to the PHICH resource and by using a PHICH group number indication factor $I_{PHICH}$, the PHICH group number corresponding to the PUSCH.

In a specific instance, the determining the PHICH group number of the PHICH resource according to the subframe position includes:

1. when an uplink-downlink subframe configuration is 0, the current special subframe is a subframe n, and the PHICH resource is located in the $K^{th}$ subframe after the special subframe n, where when n = 1 or 6, K = 5, determining that PHICH group number indication factors $I_{PHICH}$ corresponding to subframes 2, 4, 7, and 9 are 1, and $I_{PHICH}$ corresponding to another subframe in the radio frame of the current special subframe except the subframes 2, 4, 7, and 9 is 0, and determining, by using the determined $I_{PHICH}$, the PHICH group number corresponding to the PUSCH; or

when an uplink-downlink subframe configuration is 0, the current special subframe is a subframe n, and the PHICH resource is located in the $K^{th}$ subframe after the special subframe n, where when n = 1 or 6, K = 5, determining that PHICH group number indication factors $I_{PHICH}$ corresponding to subframes 1, 6, 4, and 9 are 1, and $I_{PHICH}$ corresponding to another subframe in the radio frame of the current special subframe except the subframes 1, 6, 4, and 9 is 0, and determining, by using the determined $I_{PHICH}$, the PHICH group number corresponding to the PUSCH; and

2. when an uplink-downlink subframe configuration is 6, the current special subframe is a subframe n, and the PHICH resource is located in the $K^{th}$ subframe after the special subframe n, where when n = 1 or 6, K = 4, determining that PHICH group number indication factors $I_{PHICH}$ corresponding to subframes 6 and 8 are 1, and $I_{PHICH}$ corresponding to another subframe in the radio frame of the current special subframe except the subframes 6 and 8 is 0, and determining, by using the determined $I_{PHICH}$, the PHICH group number corresponding to the PUSCH; or

when an uplink-downlink subframe configuration is 6, the current special subframe is a subframe n, and the PHICH resource is located in the $K^{th}$ subframe after the special subframe n, where when n = 1 or 6, K = 4, determining that PHICH group number indication factors $I_{PHICH}$ corresponding to subframes 1 and 4 are 1, and $I_{PHICH}$ corresponding to another subframe in the radio frame of the current special subframe except the subframes 1 and 4 is 0, and determining, by using the determined $I_{PHICH}$, the PHICH group number corresponding to the PUSCH.

**Embodiment 5**

As shown in FIG. 5, for the method provided in Embodiment 1, this embodiment of the present invention further provides user equipment 500. The user equipment includes:

a sending unit 501, configured to send a PUSCH in a current special subframe;
a determining module 502, configured to determine, according to an uplink resource used to transmit the PUSCH, a PHICH resource corresponding to the PUSCH, where the uplink resource used to transmit the PUSCH includes the current special subframe; and
a receiving unit 503, configured to receive a PHICH on the determined PHICH resource.

The determining a PHICH resource corresponding to the PUSCH includes: determining a subframe position of the resource and a PHICH group number of the resource. Therefore, for content needing to be determined, the determining unit 502 specifically includes:

a subframe position determining module, configured to determine, according to the uplink resource used to transmit the PUSCH, the subframe position of the PHICH resource corresponding to the PUSCH; and
a resource group number determining module, configured to determine the PHICH group number of the PHICH resource according to the subframe position, and determine, according to the subframe position and the PHICH group number, the PHICH resource corresponding to the PUSCH.

I. When a subframe of the uplink resource used to transmit the PUSCH is only the current special subframe, when the UE determines, according to the uplink resource used to transmit the PUSCH, the subframe position of the PHICH resource corresponding to the PUSCH, the subframe position determining module is further configured to:

when an uplink-downlink subframe configuration is 0 and the current special subframe is a subframe n, determine that the PHICH resource is located in the $K^{th}$ subframe after the current special subframe n, where when n = 1 or 6, K = 5; or when n = 1 or 6, K = 10; or
when an uplink-downlink subframe configuration is 1 and the current special subframe is a subframe n, determine that the PHICH resource is located in the $K^{th}$ subframe after the current special subframe n, where when n = 1 or 6, K = 4; when n = 1 or 6, K = 5; or when n = 1 or 6, K = 8; or

when an uplink-downlink subframe configuration is 2 and the current special subframe is a subframe n, determine that the PHICH resource is located in the $K^{th}$ subframe after the current special subframe n, where when n = 1 or 6, K = 4; when n = 1 or 6, K = 5; when n = 1 or 6, K = 7; or when n = 1 or 6, K = 8; or

when an uplink-downlink subframe configuration is 3 and the current special subframe is a subframe n, determine that the PHICH resource is located in the $K^{th}$ subframe after the current special subframe n, where when n = 1, K = 4, 5, 6, 7, 8, or 9; or

when an uplink-downlink subframe configuration is 4 and the current special subframe is a subframe n, determine that the PHICH resource is located in the $K^{th}$ subframe after the current special subframe n, where when n = 1, K = 4, 5, 6, 7, 8, or 9; or

when an uplink-downlink subframe configuration is 5 and the current special subframe is a subframe n, determine that the PHICH resource is located in the $K^{th}$ subframe after the current special subframe n, where when n = 1, K = 4, 5, 6, 7, 8, or 9; or

when an uplink-downlink subframe configuration is 6 and the current special subframe is a subframe n, determine that the PHICH resource is located in the $K^{th}$ subframe after the current special subframe n, where

when n = 1 or 6, K = 4;
when n = 1 or 6, K = 5;
when n = 1 or 6, K = 8;
when n = 1 or 6, K = 9; or
when n = 1 or 6, K = 10.

II. The existing protocol Rel-11 further specifies: an uplink PUSCH may transmitted in a subframe bundling (subframe bundling or TTI bundling) manner. The resource used to transmit the PUSCH may be a bundle frame; therefore, when the subframe position determining module determines the subframe position of the PHICH resource corresponding to the PUSCH, specific implementation may be:

when the subframe of the uplink resource used to transmit the PUSCH includes the current special subframe and another subframe, the subframe position determining module is further configured to determine, according to the coordination subframe, the subframe position of the PHICH resource corresponding to the PUSCH.

In addition, the subframe position determining module is further configured to determine, by using at least one uplink subframe, in a radio frame of the current special subframe, included in the coordination subframe and/or another special subframe, in the radio frame except the current special subframe, included in the coordination subframe, the subframe position of the PHICH resource corresponding to the PUSCH.

Optionally, to comprehensively consider a transmission delay and eNB processing time and consider a transmission delay and UE processing time, the subframe position determining module is further configured to determine, according to the last subframe L in the coordination subframe, the subframe position of the PHICH resource corresponding to the PUSCH.

Specifically, with reference to seven uplink-downlink subframe configurations that are defined in the LTE TDD system and that are shown in Table 1, in each configuration, there are multiple manners in which the subframe position determining module determines, according to the last subframe L in the coordination subframe, the subframe position of the PHICH resource corresponding to the PUSCH, which may be specifically:

Manner 1: When all uplink subframes and special subframes in one radio frame are bundled to form one bundle subframe, and each bundle subframe corresponds to one HARQ process, the subframe position determining module is further configured to:

if an uplink-downlink subframe configuration is 0, when special subframes 1 and 6 in a radio frame are bundled with subframes 2, 3, 4, 7, 8, and 9 in the radio frame, determine that the PHICH resource is located in the $K^{th}$ subframe after the last subframe L, where L = 9 and K = 6; or

if an uplink-downlink subframe configuration is 1, when special subframes 1 and 6 in a radio frame are bundled with subframes 2, 3, 7, and 8 in the radio frame, determine that the PHICH resource is located in the $K^{th}$ subframe after the last subframe L, where L = 8 and K = 6; or

if an uplink-downlink subframe configuration is 2, when special subframes 1 and 6 in a radio frame are bundled with subframes 2 and 7 in the radio frame, determine that the PHICH resource is located in the $K^{th}$ subframe after the last subframe L, where L = 7 and K = 6, 9, or 19; or

if an uplink-downlink subframe configuration is 3, when a special subframe 1 in a radio frame is bundled with subframes 2, 3, and 4 in the radio frame, determine that the PHICH resource is located in the $K^{th}$ subframe after the last subframe L, where L = 4 and K = 16; or
if an uplink-downlink subframe configuration is 5, when a special subframe 1 in a radio frame is bundled with a subframe 2 in the radio frame, determine that the PHICH resource is located in the K$^{th}$ subframe after the last subframe L, where L = 2 and K = 5, 15, or 25; or
if an uplink-downlink subframe configuration is 6, when special subframes 1 and 6 in a radio frame are bundled with subframes 2, 3, 4, 7, and 8 in the radio frame, determine that the PHICH resource is located in the K$^{th}$ subframe after the last subframe L, where L = 8 and K = 17.

Manner 2: When one radio frame includes two special subframes, each special subframe may form one bundle subframe, and bundle subframes separately correspond to different HARQ processes, which specifically includes:

If an uplink-downlink subframe configuration is 2, when a special subframe 1 in a radio frame and a subframe 2 in the radio frame are bundled to form a first bundle frame, and a special subframe 6 in the radio frame and a subframe 7 in the radio frame are bundled to form a second bundle frame, the subframe position determining module is further configured to:

determine that a first PHICH resource corresponding to the first bundle frame is located in the K1$^{th}$ subframe after the last subframe L, where L = 2 and K1 = 4; and
determine that a second PHICH resource corresponding to the second bundle frame is located in the K2$^{th}$ subframe after the last subframe L, where L = 7 and K2 = 4.

If an uplink-downlink subframe configuration is 3, when a special subframe 1 in a radio frame and subframes 2 and 3 in the radio frame are bundled to form a first bundle frame, a subframe 4 in the radio frame, a special subframe 1 in a next radio frame, and a subframe 2 in the next radio frame are bundled to form a second bundle frame, and subframes 3 and 4 in the next radio frame are bundled to form a third bundle frame, the subframe position determining module is further configured to:

determine that a first PHICH resource corresponding to the first bundle frame is located in the K$^{th}$ subframe after the last subframe L, where L = 3 and K = 6;
determine that a second PHICH resource corresponding to the second bundle frame is located in the K$^{th}$ subframe after the last subframe L, where L = 2 and K = 6; and
determine that a third PHICH resource corresponding to the third bundle frame is located in the K$^{th}$ subframe after the last subframe L, where L = 4 and K = 6.

After the UE determines the subframe position of the PHICH resource corresponding to the PUSCH, PHICH information corresponding to the PUSCH may be determined uniquely by using the following formula according to the PHICH group number and an orthogonal sequence number ( $n^{group}_{PHICH}$ , $n^{seq}_{PHICH}$ ) of the PHICH in the group and is separated:

$$n^{group}_{PHICH} = (I_{PRB\_RA} + n_{DMRS}) \bmod N^{group}_{PHICH} + I_{PHICH} N^{group}_{PHICH}$$

$$n^{seq}_{PHICH} = (\left\lfloor I_{PRB\_RA} / N^{group}_{PHICH} \right\rfloor + n_{DMRS}) \bmod 2N^{PHICH}_{SF}$$

In the method provided in this embodiment of the present invention, a time frequency domain of the PHICH resource is further determined, and the resource group number determining module is further configured to determine, according to the subframe position corresponding to the PHICH resource and by using a PHICH group number indication factor $I_{PHICH}$, the PHICH group number corresponding to the PUSCH.

Optionally, the resource group number determining module is further configured to:

when an uplink-downlink subframe configuration is 0, the current special subframe is a subframe n, and the PHICH resource is located in the K$^{th}$ subframe after the special subframe n, where when n = 1 or 6, K = 5, determine that PHICH group number indication factors $I_{PHICH}$ corresponding to subframes 2, 4, 7, and 9 are 1, and $I_{PHICH}$ corresponding to another subframe in the radio frame of the current special subframe except the subframes 2, 4, 7, and 9 is 0, and determine, by using the determined $I_{PHICH}$, the PHICH group number corresponding to the PUSCH; or when an uplink-downlink subframe configuration is 0, the current special subframe is a subframe n, and the PHICH resource is located in the $K^{th}$ subframe after the special subframe n, where when n = 1 or 6, K = 5, determine that PHICH group number indication factors $I_{PHICH}$ corresponding to subframes 1, 6, 4, and 9 are 1, and $I_{PHICH}$ corresponding to another subframe in the radio frame of the current special subframe except the subframes 1, 6, 4, and 9 is 0, and determine, by using the determined $I_{PHICH}$, the PHICH group number corresponding to the PUSCH.

Optionally, the resource group number determining module is further configured to:

when an uplink-downlink subframe configuration is 6, the current special subframe is a subframe n, and the PHICH resource is located in the $K^{th}$ subframe after the special subframe n, where when n = 1 or 6, K = 4, determine that PHICH group number indication factors $I_{PHICH}$ corresponding to subframes 6 and 8 are 1, and $I_{PHICH}$ corresponding to another subframe in the radio frame of the current special subframe except the subframes 6 and 8 is 0, and determine, by using the determined $I_{PHICH}$, the PHICH group number corresponding to the PUSCH; or when an uplink-downlink subframe configuration is 6, the current special subframe is a subframe n, and the PHICH resource is located in the $K^{th}$ subframe after the special subframe n, where when n = 1 or 6, K = 4, determine that PHICH group number indication factors $I_{PHICH}$ corresponding to subframes 1 and 4 are 1, and $I_{PHICH}$ corresponding to another subframe in the radio frame of the current special subframe except the subframes 1 and 4 is 0, and determine, by using the determined $I_{PHICH}$, the PHICH group number corresponding to the PUSCH.

**Embodiment 6**

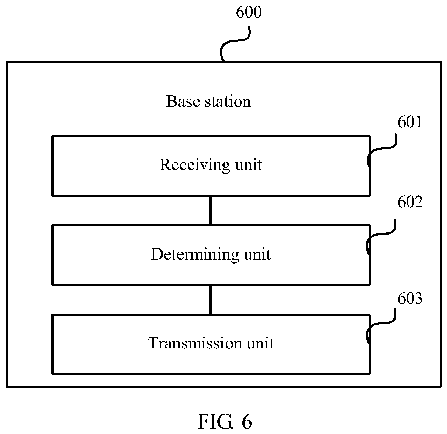

As shown in FIG. 6, based on the method provided in Embodiment 4, this embodiment of the present invention further provides a base station 600. The base station includes:

a receiving unit 601, configured to receive a PUSCH in a current special subframe;
a determining module 602, configured to determine, according to an uplink resource used to receive the PUSCH, a PHICH resource corresponding to the PUSCH, where the uplink resource includes the current special subframe; and
a transmission unit 603, configured to transmit a PHICH on the determined PHICH resource.

The PHICH resource includes two parts: a subframe position of the PHICH resource and a PHICH group number of the PHICH resource. Therefore, the determining unit 602 specifically includes:

a subframe position determining module, configured to determine, according to the uplink resource used to receive the PUSCH, the subframe position of the PHICH resource corresponding to the PUSCH; and
a resource group number determining module, configured to determine the PHICH group number of the PHICH resource according to the subframe position, and determine, according to the subframe position and the PHICH group number, the PHICH resource corresponding to the PUSCH.

I. When the subframe of the uplink resource used to transmit the PUSCH is only the current special subframe, and the subframe position determining module determines, according to the uplink resource used to receive the PUSCH, the subframe position of the PHICH resource corresponding to the PUSCH, the subframe position determining module is further configured to:

when an uplink-downlink subframe configuration is 0 and the current special subframe is a subframe n, determine that the PHICH resource is located in the $K^{th}$ subframe after the current special subframe n, where
when n = 1 or 6, K = 5; or
when n = 1 or 6, K = 10; or
when an uplink-downlink subframe configuration is 1 and the current special subframe is a subframe n, determine that the PHICH resource is located in the $K^{th}$ subframe after the current special subframe n, where
when n = 1 or 6, K = 4;
when n = 1 or 6, K = 5; or
when n = 1 or 6, K = 8; or
when an uplink-downlink subframe configuration is 2 and the current special subframe is a subframe n, determine that the PHICH resource is located in the $K^{th}$ subframe after the current special subframe n, where
when n = 1 or 6, K = 4;

when n = 1 or 6, K = 5;
when n = 1 or 6, K = 7; or
when n = 1 or 6, K = 8; or
when an uplink-downlink subframe configuration is 3 and the current special subframe is a subframe n, determine that the PHICH resource is located in the $K^{th}$ subframe after the current special subframe n, where when n = 1, K = 4, 5, 6, 7, 8, or 9; or
when an uplink-downlink subframe configuration is 4 and the current special subframe is a subframe n, determine that the PHICH resource is located in the $K^{th}$ subframe after the current special subframe n, where when n = 1, K = 4, 5, 6, 7, 8, or 9; or
when an uplink-downlink subframe configuration is 5 and the current special subframe is a subframe n, determine that the PHICH resource is located in the $K^{th}$ subframe after the current special subframe n, where when n = 1, K = 4, 5, 6, 7, 8, or 9; or
when an uplink-downlink subframe configuration is 6 and the current special subframe is a subframe n, determine that the PHICH resource is located in the $K^{th}$ subframe after the current special subframe n, where
when n = 1 or 6, K = 4;
when n = 1 or 6, K = 5;
when n = 1 or 6, K = 8;
when n = 1 or 6, K = 9; or
when n = 1 or 6, K = 10.

II. When the subframe of the uplink resource used to transmit the PUSCH includes the current special subframe and another subframe, that is, when the subframe of the uplink resource used to transmit the PUSCH includes the current special subframe and a coordination subframe bundled with the current special subframe, the subframe position determining module is further configured to determine, according to the coordination subframe, the subframe position of the PHICH resource corresponding to the PUSCH.

During specific implementation, the subframe position determining module is further configured to determine, by using at least one uplink subframe, in a radio frame of the current special subframe, included in the coordination subframe and/or another special subframe in the radio frame except the current special subframe, the subframe position of the PHICH resource corresponding to the PUSCH.

Optionally, to comprehensively consider a transmission delay and eNB processing time and consider a transmission delay and UE processing time, in this embodiment of the present invention, the subframe position determining module is further configured to determine, according to the last subframe L in the coordination subframe, the subframe position of the PHICH resource corresponding to the PUSCH.

Specifically, with reference to the seven uplink-downlink subframe configurations that are defined in the LTE (LTE, Long Term Evolution) TDD system and that are shown in Table 1, the following describes in detail an implementable solution of determining, in each configuration according to the last subframe L in the coordination subframe, the subframe position of the PHICH resource corresponding to the PUSCH:

Because for different configurations, positions and quantities of uplink subframes are different, during specific bundling, there may be multiple cases. The following gives a description according to different bundling cases.

Manner 1: When all uplink subframes in one radio frame are bundled to form one bundle subframe, and each bundle subframe corresponds to one HARQ process, the subframe position determining module is further configured to:

if an uplink-downlink subframe configuration is 0, when special subframes 1 and 6 in a radio frame are bundled with subframes 2, 3, 4, 7, 8, and 9 in the radio frame, determine that the PHICH resource is located in the $K^{th}$ subframe after the last subframe L, where L = 9 and K = 6; or
if an uplink-downlink subframe configuration is 1, when special subframes 1 and 6 in a radio frame are bundled with subframes 2, 3, 7, and 8 in the radio frame, determine that the PHICH resource is located in the $K^{th}$ subframe after the last subframe L, where L = 8 and K = 6; or
if an uplink-downlink subframe configuration is 2, when special subframes 1 and 6 in a radio frame are bundled with subframes 2 and 7 in the radio frame, determine that the PHICH resource is located in the $K^{th}$ subframe after the last subframe L, where L = 7 and K = 6, 9, or 19; or
if an uplink-downlink subframe configuration is 3, when a special subframe 1 in a radio frame is bundled with subframes 2, 3, and 4 in the radio frame, determine that the PHICH resource is located in the $K^{th}$ subframe after the last subframe L, where L = 4 and K = 16; or
if an uplink-downlink subframe configuration is 5, when a special subframe 1 in a radio frame is bundled with a subframe 2 in the radio frame, determine that the PHICH resource is located in the $K^{th}$ subframe after the last subframe L, where L = 2 and K = 5, 15, or 25; or
if an uplink-downlink subframe configuration is 6, when special subframes 1 and 6 in a radio frame are bundled with subframes 2, 3, 4, 7, and 8 in the radio frame, determine that the PHICH resource is located in the $K^{th}$ subframe after the last subframe L, where L = 8 and K = 17.

Manner 2: When one radio frame includes two special subframes, each special subframe may form one bundle subframe, and bundle subframes separately correspond to different HARQ processes, specific implementation may be:

1. If an uplink-downlink subframe configuration is 2, when a special subframe 1 in a radio frame and a subframe 2 in the radio frame are bundled to form a first bundle frame, and a special subframe 6 in the radio frame and a subframe 7 in the radio frame are bundled to form a second bundle frame, the subframe position determining module is further configured to:

determine that a first PHICH resource corresponding to the first bundle frame is located in the $K1^{th}$ subframe after the last subframe L, where L = 2 and K1 = 4; and
determine that a second PHICH resource corresponding to the second bundle frame is located in the $K2^{th}$ subframe after the last subframe L, where L = 7 and K2 = 4.

2. If an uplink-downlink subframe configuration is 3, when a special subframe 1 in a radio frame and subframes 2 and 3 in the radio frame are bundled to form a first bundle frame, a subframe 4 in the radio frame, a special subframe 1 in a next radio frame, and a subframe 2 in the next radio frame are bundled to form a second bundle frame, and subframes 3 and 4 in the next radio frame are bundled to form a third bundle frame, the subframe position determining module is further configured to:

determine that a first PHICH resource corresponding to the first bundle frame is located in the $K^{th}$ subframe after the last subframe L, where L = 3 and K = 6;
determine that a second PHICH resource corresponding to the second bundle frame is located in the $K^{th}$ subframe after the last subframe L, where L = 2 and K = 6; and
determine that a third PHICH resource corresponding to the third bundle frame is located in the $K^{th}$ subframe after the last subframe L, where L = 4 and K = 6.

After the base station determines the subframe position of the PHICH resource corresponding to the PUSCH, the PHICH information corresponding to the base station may be determined uniquely by using the following formula according to the PHICH group number and an orthogonal sequence number ( $n_{PHICH}^{group}$ , $n_{PHICH}^{seq}$ ) of the PHICH in the group and is separated:

$$n_{PHICH}^{group} = (I_{PRB\_RA} + n_{DMRS}) \bmod N_{PHICH}^{group} + I_{PHICH} N_{PHICH}^{group}$$

$$n_{PHICH}^{seq} = (\left\lfloor I_{PRB\_RA} / N_{PHICH}^{group} \right\rfloor + n_{DMRS}) \bmod 2 N_{SF}^{PHICH} .$$

In the method provided in this embodiment of the present invention, a time frequency domain of the PHICH resource is further determined, and the resource group number determining module is further configured to determine, according to the subframe position corresponding to the PHICH resource and by using a PHICH group number indication factor $I_{PHICH}$, the PHICH group number corresponding to the PUSCH.

In a specific instance, when the base station determines the PHICH group number of the PHICH resource according to the subframe position, the resource group number determining module is further configured to: when an uplink-downlink subframe configuration is 0, the current special subframe is a subframe n, and the PHICH resource is located in the $K^{th}$ subframe after the special subframe n, where when n = 1 or 6, K = 5, determine that PHICH group number indication factors $I_{PHICH}$ corresponding to subframes 2, 4, 7, and 9 are 1, and $I_{PHICH}$ corresponding to another subframe in the radio frame of the current special subframe except the subframes 2, 4, 7, and 9 is 0, and determine, by using the determined $I_{PHICH}$, the PHICH group number corresponding to the PUSCH; or

when an uplink-downlink subframe configuration is 0, the current special subframe is a subframe n, and the PHICH resource is located in the K$^{th}$ subframe after the special subframe n, where when n = 1 or 6, K = 5, determine that PHICH group number indication factors $I_{PHICH}$ corresponding to subframes 1, 6, 4, and 9 are 1, and $I_{PHICH}$ corresponding to another subframe in the radio frame of the current special subframe except the subframes 1, 6, 4, and 9 is 0, and determine, by using the determined $I_{PHICH}$, the PHICH group number corresponding to the PUSCH.

Optionally, the resource group number determining module is further configured to:

when an uplink-downlink subframe configuration is 6, the current special subframe is a subframe n, and the PHICH resource is located in the K$^{th}$ subframe after the special subframe n, where when n = 1 or 6, K = 4, determine that PHICH group number indication factors $I_{PHICH}$ corresponding to subframes 6 and 8 are 1, and $I_{PHICH}$ corresponding to another subframe in the radio frame of the current special subframe except the subframes 6 and 8 is 0, and determine, by using the determined $I_{PHICH}$, the PHICH group number corresponding to the PUSCH; or
when an uplink-downlink subframe configuration is 6, the current special subframe is a subframe n, and the PHICH resource is located in the K$^{th}$ subframe after the special subframe n, where when n = 1 or 6, K = 4, determine that PHICH group number indication factors $I_{PHICH}$ corresponding to subframes 1 and 4 are 1, and $I_{PHICH}$ corresponding to another subframe in the radio frame of the current special subframe except the subframes 1 and 4 is 0, and determine, by using the determined $I_{PHICH}$, the PHICH group number corresponding to the PUSCH.

One or more technical solutions of the embodiments of this application have at least the following technical effects:
The method provided in the embodiments of the present invention resolves the problem in the prior art that when a special subframe (in a separate or bundling manner) is used to transmit an uplink PUSCH, there is no specific solution to determine a receiving position of a downlink PHICH corresponding to an uplink PUSCH.

In addition, when the receiving position of the downlink PHICH is determined, a method for adjusting a PHICH group number corresponding to a PHICH resource is further provided, thereby providing a method for resolving a conflict between a PHICH resource corresponding to a newly determined PUSCH and an original configuration.

It may be clearly understood by a person skilled in the art that, for the purpose of convenient and brief description, division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. For a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely used to describe in detail the technical solutions of the present application. The descriptions of the foregoing embodiments are merely intended to help understand the method and core idea of the present invention, and shall not be construed as a limitation to the present invention. Any variation or replacement readily figured out by a person skilled in the art within the technical scope of the appended claims shall fall within the protection scope of the present invention.

**Claims**

1. A control channel resource allocation method, performed by a user equipment, wherein the method comprises:

sending (201) a physical uplink shared channel, PUSCH, in a special subframe;
determining (202), according to an uplink resource used to transmit the PUSCH, a physical hybrid automatic repeat request indicator channel, PHICH, resource corresponding to the PUSCH, wherein the uplink resource used to transmit the PUSCH comprises the special subframe; and
receiving (203) a PHICH on the determined PHICH resource;
wherein the determining, according to an uplink resource used to transmit the PUSCH, a PHICH resource corresponding to the PUSCH comprises:

determining (301), according to the uplink resource used to transmit the PUSCH, a subframe position of the PHICH resource corresponding to the PUSCH; and
determining (302) a PHICH group number of the PHICH resource according to the subframe position, and determining, according to the subframe position and the PHICH group number, the PHICH resource corresponding to the PUSCH;
**characterized in that**
when a subframe of the uplink resource used to transmit the PUSCH is only the current special subframe, the determining, by the UE according to the uplink resource used to transmit the PUSCH, a subframe position of the PHICH resource corresponding to the PUSCH comprises:

when an uplink-downlink subframe configuration is 0 and the current special subframe is a subframe $n$, determining that the PHICH resource is located in the $K^{th}$ subframe after the current special subframe $n$, wherein when $n = 1$ or $6$, $K = 5$; or
when an uplink-downlink subframe configuration is 1 and the current special subframe is a subframe $n$, determining that the PHICH resource is located in the $K^{th}$ subframe after the current special subframe $n$, wherein when $n = 1$ or $6$, $K = 5$; or
when an uplink-downlink subframe configuration is 2 and the current special subframe is a subframe $n$, determining that the PHICH resource is located in the $K^{th}$ subframe after the current special subframe $n$, wherein when $n = 1$ or $6$, $K = 7$; or
when an uplink-downlink subframe configuration is 3 and the current special subframe is a subframe $n$, determining that the PHICH resource is located in the $K^{th}$ subframe after the current special subframe $n$, wherein when $n = 1$, $K = 7$; or
when an uplink-downlink subframe configuration is 4 and the current special subframe is a subframe $n$, determining that the PHICH resource is located in the $K^{th}$ subframe after the current special subframe $n$, wherein when $n = 1$, $K = 7$; or
when an uplink-downlink subframe configuration is 5 and the current special subframe is a subframe $n$, determining that the PHICH resource is located in the $K^{th}$ subframe after the current special subframe $n$, wherein when $n = 1$, $K = 7$; or
when an uplink-downlink subframe configuration is 6 and the current special subframe is a subframe $n$, determining that the PHICH resource is located in the $K^{th}$ subframe after the current special subframe $n$, wherein when $n = 1$ or $6$, $K = 4$.

2. A control channel resource allocation method, performed by a base station, wherein the method comprises:

receiving (401) a physical uplink shared channel, PUSCH, in a special subframe;
determining (402), according to an uplink resource used to receive the PUSCH, a physical hybrid automatic repeat request indicator channel, PHICH, resource corresponding to the PUSCH, wherein the uplink resource comprises the special subframe; and
transmitting (403) a PHICH on the determined PHICH resource;
wherein the determining, according to an uplink resource used to receive the PUSCH, a PHICH resource corresponding to the PUSCH comprises:

determining, according to the uplink resource used to receive the PUSCH, a subframe position of the PHICH resource corresponding to the PUSCH; and

determining a PHICH group number of the PHICH resource according to the subframe position, and determining, according to the subframe position and the PHICH group number, the PHICH resource corresponding to the PUSCH;

**characterized in that**

when a subframe of the uplink resource used to transmit the PUSCH is only the current special subframe, the determining, according to the uplink resource used to receive the PUSCH, a subframe position of the PHICH resource corresponding to the PUSCH comprises:

when an uplink-downlink subframe configuration is 0 and the current special subframe is a subframe n, determining that the PHICH resource is located in the $K^{th}$ subframe after the current special subframe n, wherein when n = 1 or 6, K = 5; or

when an uplink-downlink subframe configuration is 1 and the current special subframe is a subframe n, determining that the PHICH resource is located in the $K^{th}$ subframe after the current special subframe n, wherein when n = 1 or 6, K = 5; or

when an uplink-downlink subframe configuration is 2 and the current special subframe is a subframe n, determining that the PHICH resource is located in the $K^{th}$ subframe after the current special subframe n, wherein when n = 1 or 6, K = 7; or

when an uplink-downlink subframe configuration is 3 and the current special subframe is a subframe n, determining that the PHICH resource is located in the $K^{th}$ subframe after the current special subframe n, wherein when n = 1, K =7; or

when an uplink-downlink subframe configuration is 4 and the current special subframe is a subframe n, determining that the PHICH resource is located in the $K^{th}$ subframe after the current special subframe n, wherein when n = 1, K =7; or

when an uplink-downlink subframe configuration is 5 and the current special subframe is a subframe n, determining that the PHICH resource is located in the $K^{th}$ subframe after the current special subframe n, wherein when n = 1, K = 7; or

when an uplink-downlink subframe configuration is 6 and the current special subframe is a subframe n, determining that the PHICH resource is located in the $K^{th}$ subframe after the current special subframe n, wherein when n = 1 or 6, K = 4.

3. A communications device (500), configured to perform the method according to claim 1.

4. A communications device (600), configured to perform the method according to claim 2.

5. A computer-readable storage medium comprising instructions, when the instructions are executed, the steps of the method of claim 1 are carried out.

6. A computer-readable storage medium comprising instructions, when the instructions are executed, the steps of the method of claim 2 are carried out.

7. A communication system, comprising the communications device (500) according to claim 3 and the communications device (600) according to claim 4.

**Patentansprüche**

1. Verfahren zur Zuweisung von Steuerkanalressourcen, das von einem Benutzergerät durchgeführt wird, wobei das Verfahren Folgendes umfasst:

Senden (201) eines gemeinsamen physikalischen Uplink-Kanals (Physical Uplink Shared Channel = PUSCH) in einem speziellen Subframe;

Bestimmen (202), gemäß einer zum Senden des PUSCH verwendeten Uplink-Ressource, einer dem PUSCH entsprechenden physikalischen hybriden automatischen Wiederholungsanforderungs-Indikatorkanal (Physical Hybrid Automatic Repeat Request Indicator Channel = PHICH)-Ressource,

wobei die zum Senden des PUSCH verwendete Uplink-Ressource den speziellen Subframe umfasst; und

Empfangen (203) eines PHICH auf der bestimmten PHICH-Ressource;

wobei das Bestimmen, gemäß einer zum Senden des PUSCH verwendeten Uplink-Ressource, einer dem PUSCH entsprechenden PHICH-Ressource Folgendes umfasst:

Bestimmen (301), gemäß der zum Senden des PUSCH verwendeten Uplink-Ressource, einer Subframe-Position der dem PUSCH entsprechenden PHICH-Ressource; und

Bestimmen (302) einer PHICH-Gruppennummer der PHICH-Ressource gemäß der Subframe-Position, und Bestimmen, gemäß der Subframe-Position und der PHICH-Gruppennummer, der dem PUSCH entsprechenden PHICH-Ressource;

**dadurch gekennzeichnet, dass**,

wenn ein zum Senden des PUSCH verwendeter Subframe der Uplink-Ressource nur der aktuelle spezielle Subframe ist, das Bestimmen einer Subframe-Position der dem PUSCH entsprechenden PHICH-Ressource durch das UE gemäß der zum Senden des PUSCH verwendeten Uplink-Ressource Folgendes umfasst:

wenn eine Uplink-Downlink-Subframe-Konfiguration 0 ist und der aktuelle spezielle Subframe ein Subframe n ist, Bestimmen, dass sich die PHICH-Ressource im K-ten Subframe nach dem aktuellen speziellen Subframe n befindet, wobei, wenn n = 1 oder 6, K = 5; oder

wenn eine Uplink-Downlink-Subframe-Konfiguration 1 ist und der aktuelle spezielle Subframe ein Subframe n ist, Bestimmen, dass sich die PHICH-Ressource im K-ten Subframe nach dem aktuellen speziellen Subframe n befindet, wobei, wenn n = 1 oder 6, K = 5; oder

wenn eine Uplink-Downlink-Subframe-Konfiguration 2 ist und der aktuelle spezielle Subframe ein Subframe n ist, Bestimmen, dass sich die PHICH-Ressource im K-ten Subframe nach dem aktuellen speziellen Subframe n befindet, wobei, wenn n = 1 oder 6, K = 7; oder

wenn eine Uplink-Downlink-Subframe-Konfiguration 3 ist und der aktuelle spezielle Subframe ein Subframe n ist, Bestimmen, dass sich die PHICH-Ressource im K-ten Subframe nach dem aktuellen speziellen Subframe n befindet, wobei, wenn n = 1, K = 7; oder

wenn eine Uplink-Downlink-Subframe-Konfiguration 4 ist und der aktuelle spezielle Subframe ein Subframe n ist, Bestimmen, dass sich die PHICH-Ressource im K-ten Subframe nach dem aktuellen speziellen Subframe n befindet, wobei, wenn n = 1, K = 7; oder

wenn eine Uplink-Downlink-Subframe-Konfiguration 5 ist und der aktuelle spezielle Subframe ein Subframe n ist, Bestimmen, dass sich die PHICH-Ressource im K-ten Subframe nach dem aktuellen speziellen Subframe n befindet, wobei, wenn n = 1, K = 7; oder

wenn eine Uplink-Downlink-Subframe-Konfiguration 6 ist und der aktuelle spezielle Subframe ein Subframe n ist, Bestimmen, dass sich die PHICH-Ressource im K-ten Subframe nach dem aktuellen speziellen Subframe n befindet, wobei, wenn n = 1 oder 6, K = 4.

2. Verfahren zur Zuweisung von Steuerkanalressourcen, das von einer Basisstation durchgeführt wird, wobei das Verfahren Folgendes umfasst:

Empfangen (401) eines gemeinsamen physikalischen Uplink-Kanals (Physical Uplink Shared Channel = PUSCH) in einem speziellen Subframe;

Bestimmen (402), gemäß einer zum Empfangen des PUSCH verwendeten Uplink-Ressource, einer physikalischen hybriden automatischen Wiederholungsanforderungs-Indikatorkanal (PHICH)-Ressource, die dem PUSCH entspricht, wobei die Uplink-Ressource den speziellen Subframe enthält; und

Senden (403) eines PHICH auf der bestimmten PHICH-Ressource;

wobei das Bestimmen, gemäß einer zum Empfangen des PUSCH verwendeten Uplink-Ressource, einer dem PUSCH entsprechenden PHICH-Ressource Folgendes umfasst:

Bestimmen, gemäß der zum Empfangen des PUSCH verwendeten Uplink-Ressource, einer Subframe-Position der dem PUSCH entsprechenden PHICH-Ressource; und

Bestimmen einer PHICH-Gruppennummer der PHICH-Ressource gemäß der Subframe-Position, und Bestimmen, gemäß der Subframe-Position und der PHICH-Gruppennummer, der dem PUSCH entsprechenden PHICH-Ressource;

**dadurch gekennzeichnet, dass**

wenn ein zum Senden des PUSCH verwendeter Subframe der Uplink-Ressource nur der aktuelle spezielle Subframe ist, das Bestimmen, gemäß der zum Empfangen des PUSCH verwendeten Uplink-Ressource, einer Subframe-Position der dem PUSCH entsprechenden PHICH-Ressource Folgendes umfasst:

wenn eine Uplink-Downlink-Subframe-Konfiguration 0 ist und der aktuelle spezielle Subframe ein Subframe n ist, Bestimmen, dass sich die PHICH-Ressource im K-ten Subframe nach dem aktuellen speziellen Subframe n befindet, wobei, wenn n = 1 oder 6, K = 5; oder

wenn eine Uplink-Downlink-Subframe-Konfiguration 1 ist und der aktuelle spezielle Subframe ein Subframe n ist, Bestimmen, dass sich die PHICH-Ressource im K-ten Subframe nach dem aktuellen speziellen Subframe n befindet, wobei, wenn n = 1 oder 6, K = 5; oder

wenn eine Uplink-Downlink-Subframe-Konfiguration 2 ist und der aktuelle spezielle Subframe ein Subframe n ist, Bestimmen, dass sich die PHICH-Ressource im K-ten Subframe nach dem aktuellen speziellen Subframe n befindet, wobei, wenn n = 1 oder 6, K = 7; oder

wenn eine Uplink-Downlink-Subframe-Konfiguration 3 ist und der aktuelle spezielle Subframe ein Subframe n ist, Bestimmen, dass sich die PHICH-Ressource im K-ten Subframe nach dem aktuellen speziellen Subframe n befindet, wobei, wenn n = 1, K = 7; oder

wenn eine Uplink-Downlink-Subframe-Konfiguration 4 ist und der aktuelle spezielle Subframe ein Subframe n ist, Bestimmen, dass sich die PHICH-Ressource im K-ten Subframe nach dem aktuellen speziellen Subframe n befindet, wobei, wenn n = 1, K = 7; oder

wenn eine Uplink-Downlink-Subframe-Konfiguration 5 ist und der aktuelle spezielle Subframe ein Subframe n ist, Bestimmen, dass sich die PHICH-Ressource im K-ten Subframe nach dem aktuellen speziellen Subframe n befindet, wobei, wenn n = 1, K = 7; oder

wenn eine Uplink-Downlink-Subframe-Konfiguration 6 ist und der aktuelle spezielle Subframe ein Subframe n ist, Bestimmen, dass sich die PHICH-Ressource im K-ten Subframe nach dem aktuellen speziellen Subframe n befindet, wobei, wenn n = 1 oder 6, K = 4.

3. Kommunikationsgerät (500), das ausgebildet ist, um das Verfahren gemäß Anspruch 1 durchzuführen.

4. Kommunikationsgerät (600), das ausgebildet ist, um das Verfahren gemäß Anspruch 2 durchzuführen.

5. Computerlesbares Speichermedium, das Anweisungen enthält, bei deren Ausführung die Schritte des Verfahrens nach Anspruch 1 ausgeführt werden.

6. Computerlesbares Speichermedium, das Anweisungen enthält, bei deren Ausführung die Schritte des Verfahrens nach Anspruch 2 ausgeführt werden.

7. Kommunikationssystem, das das Kommunikationsgerät (500) gemäß Anspruch 3 und das Kommunikationsgerät (600) gemäß Anspruch 4 umfasst.

**Revendications**

1. Procédé d'allocation de ressources de canal de commande, exécuté par un équipement d'utilisateur, dans lequel le procédé comprend les étapes consistant à :

envoyer (201) un canal physique partagé de liaison montante, PUSCH, dans une sous-trame spéciale ;
déterminer (202), selon une ressource de liaison montante utilisée pour transmettre le PUSCH, une ressource de canal indicateur de demande de répétition automatique hybride physique, PHICH, correspondant au PUSCH, dans lequel la ressource de liaison montante utilisée pour transmettre le PUSCH comprend la sous-trame spéciale ; et
recevoir (203) un PHICH sur la ressource PHICH déterminée ;
dans lequel la détermination, selon une ressource de liaison montante utilisée pour transmettre le PUSCH, d'une ressource PHICH correspondant au PUSCH comprend les étapes consistant à :

déterminer (301), selon la ressource de liaison montante utilisée pour transmettre le PUSCH, une position de sous-trame de la ressource PHICH correspondant au PUSCH ; et
déterminer (302) un numéro de groupe PHICH de la ressource PHICH selon la position de sous-trame, et déterminer, selon la position de sous-trame et le numéro de groupe PHICH, la ressource PHICH correspondant au PUSCH ;
**caractérisé en ce que**
lorsqu'une sous-trame de la ressource de liaison montante utilisée pour transmettre le PUSCH est seulement la sous-trame spéciale actuelle, la détermination, par l'UE selon la ressource de liaison montante utilisée pour transmettre le PUSCH, d'une position de sous-trame de la ressource PHICH correspondant au PUSCH comprend l'étape consistant à :

lorsqu'une configuration de sous-trame de liaison montante-liaison descendante est 0 et que la sous-trame spéciale actuelle est une sous-trame n, déterminer que la ressource PHICH est située dans la $K^{ième}$ sous-trame après la sous-trame spéciale actuelle n, dans lequel lorsque n = 1 ou 6, K = 5 ; ou lorsqu'une configuration de sous-trame de liaison montante-liaison descendante est 1 et que la sous-trame spéciale actuelle est une sous-trame n, déterminer que la ressource PHICH est située dans la $K^{ième}$ sous-trame après la sous-trame spéciale actuelle n, dans lequel lorsque n = 1 ou 6, K = 5 ; ou lorsqu'une configuration de sous-trame de liaison montante-liaison descendante est 2 et que la sous-trame spéciale actuelle est une sous-trame n, déterminer que la ressource PHICH est située dans la $K^{ième}$ sous-trame après la sous-trame spéciale actuelle n, dans lequel lorsque n = 1 ou 6, K = 7 ; ou lorsqu'une configuration de sous-trame de liaison montante-liaison descendante est 3 et que la sous-trame spéciale actuelle est une sous-trame n, déterminer que la ressource PHICH est située dans la $K^{ième}$ sous-trame après la sous-trame spéciale actuelle n, dans lequel lorsque n = 1, K = 7 ; ou lorsqu'une configuration de sous-trame de liaison montante-liaison descendante est 4 et que la sous-trame spéciale actuelle est une sous-trame n, déterminer que la ressource PHICH est située dans la $K^{ième}$ sous-trame après la sous-trame spéciale actuelle n, dans lequel lorsque n = 1, K = 7 ; ou lorsqu'une configuration de sous-trame de liaison montante-liaison descendante est 5 et que la sous-trame spéciale actuelle est une sous-trame n, déterminer que la ressource PHICH est située dans la $K^{ième}$ sous-trame après la sous-trame spéciale actuelle n, dans lequel lorsque n = 1, K = 7 ; ou lorsqu'une configuration de sous-trame de liaison montante-liaison descendante est 6 et que la sous-trame spéciale actuelle est une sous-trame n, déterminer que la ressource PHICH est située dans la $K^{ième}$ sous-trame après la sous-trame spéciale actuelle n, dans lequel lorsque n = 1 ou 6, K = 4.

2. Procédé d'allocation de ressources de canal de commande, exécuté par une station de base, dans lequel le procédé comprend de :

recevoir (401) un canal physique partagé de liaison montante, PUSCH, dans une sous-trame spéciale ; déterminer (402), selon une ressource de liaison montante utilisée pour recevoir le PUSCH, une ressource de canal indicateur de demande de répétition automatique hybride physique, PHICH, correspondant au PUSCH, dans lequel la ressource de liaison montante comprend la sous-trame spéciale ; et transmettre (403) un PHICH sur la ressource PHICH déterminée ; dans lequel la détermination, selon une ressource de liaison montante utilisée pour recevoir le PUSCH, d'une ressource PHICH correspondant au PUSCH comprend les étapes consistant à :

déterminer, selon la ressource de liaison montante utilisée pour recevoir le PUSCH, une position de sous-trame de la ressource PHICH correspondant au PUSCH ; et déterminer un numéro de groupe PHICH de la ressource PHICH selon la position de sous-trame, et déterminer, selon la position de sous-trame et le numéro de groupe PHICH, la ressource PHICH correspondant au PUSCH ; **caractérisé en ce que** lorsqu'une sous-trame de la ressource de liaison montante utilisée pour transmettre le PUSCH est seulement la sous-trame spéciale actuelle, la détermination, selon la ressource de liaison montante utilisée pour recevoir le PUSCH, d'une position de sous-trame de la ressource PHICH correspondant au PUSCH comprend l'étape consistant à :

lorsqu'une configuration de sous-trame de liaison montante-liaison descendante est 0 et que la sous-trame spéciale actuelle est une sous-trame n, déterminer que la ressource PHICH est située dans la $K^{ième}$ sous-trame après la sous-trame spéciale actuelle n, dans lequel lorsque n = 1 ou 6, K = 5 ; ou lorsqu'une configuration de sous-trame de liaison montante-liaison descendante est 1 et que la sous-trame spéciale actuelle est une sous-trame n, déterminer que la ressource PHICH est située dans la $K^{ième}$ sous-trame après la sous-trame spéciale actuelle n, dans lequel lorsque n = 1 ou 6, K = 5 ; ou lorsqu'une configuration de sous-trame de liaison montante-liaison descendante est 2 et que la sous-trame spéciale actuelle est une sous-trame n, déterminer que la ressource PHICH est située dans la $K^{ième}$ sous-trame après la sous-trame spéciale actuelle n, dans lequel lorsque n = 1 ou 6, K = 7 ; ou lorsqu'une configuration de sous-trame de liaison montante-liaison descendante est 3 et que la sous-trame spéciale actuelle est une sous-trame n, déterminer que la ressource PHICH est située dans la $K^{ième}$ sous-trame après la sous-trame spéciale actuelle n, dans lequel lorsque n = 1, K = 7 ; ou

lorsqu'une configuration de sous-trame de liaison montante-liaison descendante est 4 et que la sous-trame spéciale actuelle est une sous-trame n, déterminer que la ressource PHICH est située dans la K$^{ième}$ sous-trame après la sous-trame spéciale actuelle n, dans lequel lorsque n = 1, K = 7 ; ou lorsqu'une configuration de sous-trame de liaison montante-liaison descendante est 5 et que la sous-trame spéciale actuelle est une sous-trame n, déterminer que la ressource PHICH est située dans la K$^{ième}$ sous-trame après la sous-trame spéciale actuelle n, dans lequel lorsque n = 1, K = 7 ; ou lorsqu'une configuration de sous-trame de liaison montante-liaison descendante est 6 et que la sous-trame spéciale actuelle est une sous-trame n, déterminer que la ressource PHICH est située dans la K$^{ième}$ sous-trame après la sous-trame spéciale actuelle n, dans lequel lorsque n = 1 ou 6, K = 4.

3. Dispositif de communication (500), configuré pour exécuter le procédé selon la revendication 1.

4. Dispositif de communication (600), configuré pour exécuter le procédé selon la revendication 2.

5. Support de stockage lisible par ordinateur comprenant des instructions, lorsque les instructions sont exécutées, les étapes du procédé de la revendication 1 sont réalisées.

6. Support de stockage lisible par ordinateur comprenant des instructions, lorsque les instructions sont exécutées, les étapes du procédé de la revendication 2 sont réalisées.

7. Système de communication, comprenant le dispositif de communication (500) selon la revendication 3 et le dispositif de communication (600) selon la revendication 4.

Downlink pilot
time slot    Guard period    Uplink pilot
time slot

FIG. 1

201
UE transmits a PUSCH in a current special subframe

202
The UE determines, according to an uplink resource used to transmit the
PUSCH, a PHICH resource corresponding to the PUSCH

203
Receive a PHICH on the determined PHICH resource

FIG. 2

301
UE determines, according to an uplink resource used to transmit a PUSCH,
a subframe position of a PHICH resource corresponding to the PUSCH

302
Determine a PHICH group number of the PHICH resource according to the
subframe position, and determine, by using the subframe position and the
PHICH group number, the PHICH resource corresponding to the PUSCH

FIG. 3

401

A base station receives a PUSCH in a current special subframe

402

The base station determines, according to an uplink resource used to receive the PUSCH, a PHICH resource corresponding to the PUSCH

403

The base station transmits the PHICH on the determined PHICH resource

FIG. 4

500

User equipment

501

Sending unit

502

Determining unit

503

Receiving unit

FIG. 5

600

Base station

Receiving unit 601

Determining unit 602

Transmission unit 603

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013141770 A1

- US 2014029490 A1

**Non-patent literature cited in the description**

- **HARRI HOLMA et al.** LTE for UMTS - OFDMA and SC-FDMA Based Radio Access. John Wiley & Sons, 02 June 2009

- *3rd Generation Partnership Project (3GPP) technical specification 36.213, version 12.1.0,* 19 March 2014